# FASCICULE DE BREVET EUROPEEN

(11) **EP 0 776 822 B1**
(45) Date de publication et mention de la délivrance du brevet: **31.05.2000**
(21) Numéro de dépôt: 96402539.9
(22) Date de dépôt: 26.11.1996
(51) Int. Cl.: B64D 45/02, B64C 11/26

(54) **Pale à blindage de protection renforcée contre la foudre, pour rotor de giravion**
Rotorblätter eines Drehflügelflugzeuges mit Blitzschutzschild
Helicopter rotor blade with reinforced shielding against lightning strike

(30) Priorité: 29.11.1995 FR 9514127
(43) Date de publication de la demande: 04.06.1997
(73) Titulaire: EUROCOPTER, F-13725 Marignane Cédex (FR)
(72) Inventeur: Bost, Michel Fernand, 94340 Joinville-le-Pont (FR); Bauchet, Jean-Cyril Pierre, 91230 Montgeron (FR); Brunner, Daniel, 95230 Soisy-Sous-Montmorency (FR)
(74) Mandataire: Bérogin, Francis

(56) Documents cités:
- US-A- 1 842 178
- US-A- 3 923 421
- US-A- 4 944 655

## Description

L'invention concerne une pale à blindage de protection renforcée contre la foudre, pour un rotor de giravion, et en particulier pour un rotor arrière d'hélicoptère.

L'invention se rapporte à une pale de type connu, comprenant une structure composite, essentiellement en matériau composite à matrice synthétique et fibres de renfort minérales et/ou organiques, réalisant une partie courante profilée délimitée entre une surface d'extrados et une surface d'intrados qui s'étendent, selon la corde de la pale, entre un bord d'attaque et un bord de fuite, et, selon l'envergure de la pale, entre une extrémité de ladite partie courante dénommée couramment saumon et un pied de pale qui prolonge l'extrémité opposée de ladite partie courante, et qui comporte des moyens d'attache de la pale, pour sa liaison à un moyeu de rotor. Le saumon d'extrémité peut, d'une part, avoir une forme en plan en continuité par rapport à la partie courante ou être évolutive, et, d'autre part, constituer un élément structural soit intégré dans la continuité de la structure de la partie courante, soit rapporté et distinct de la structure de la partie courante, l'assemblage étant alors assuré par des moyens mécaniques ou par collage autour de renforts dimensionnés en conséquence.

Les moyens d'attache de la pale peuvent assurer la liaison de cette pale directement au moyeu du rotor ou indirectement à ce moyeu, par l'intermédiaire d'un organe de liaison, communément appelé manchon, lui-même relié au moyeu par des moyens de retenue et d'articulation sur ce dernier.

US-A-4,944,655 décrit une pale d'hélice en matière plastique armée de fibres comprenant une partie courante profilée et destinée à être rattachée par un pied de pale à un moyeu d'hélice comportant des parties métalliques, la pale comprenant également un système de protection combinée contre l'érosion, le givrage et la foudre.

Ce système de protection combinée comporte un blindage de protection contre la foudre, qui comprend une coiffe métallique de protection, réalisée en un matériau qui est notamment électriquement conducteur, par exemple en titane ou alliage de titane, et qui est fixée au bord d'attaque et aux parties adjacentes à ce dernier des surfaces d'extrados et d'intrados de la partie courante de la pale, pour assurer la protection du bord d'attaque, et une enveloppe de protection du saumon de pale, à l'extrémité de la partie courante qui est opposée à celle prolongée par le pied de pale, cette enveloppe étant également métallique et électriquement conductrice, et s'étendant sur toute la corde de l'extrémité du saumon de pale qu'elle revêt, en étant reliée à la coiffe de protection du bord d'attaque de manière à être en continuité électrique avec cette coiffe. Enfin, sur le pied de pale ou au voisinage de ce dernier, le blindage de protection de la pale d'hélice contre la foudre comprend des moyens électriquement conducteurs, tels que câbles et/ou rubans métalliques, pour assurer la continuité électrique entre la coiffe de protection du bord d'attaque et les parties métalliques et électriquement conductrices du moyeu, pour la mise à la masse du blindage de protection contre la foudre.

Le problème à la base de l'invention est de renforcer la tenue à la foudre des pales de rotors de giravions, tels que les hélicoptères, et en particulier des pales à structure composite du type défini ci-dessus, notamment des pales de rotors arrière, pour satisfaire aux exigences accrues de nouvelles normes en vigueur, et qui ne peuvent être respectées par les moyens classiques utilisés sur les pales de tels rotors pour assurer le passage du courant de foudre, à savoir des clinquants ou minces rubans métalliques électriquement conducteurs, par exemple de cuivre, intégrés dans la structure composite des pales et s'étendant du saumon au pied des pales.

Le but de l'invention est d'obtenir l'amélioration recherchée du comportement des pales de rotors d'hélicoptères à la foudre en appliquant les enseignements de US-A-4,944,655, et en perfectionnant les moyens de blindage proposés dans ce brevet sur des pales de rotors d'hélicoptères, de sorte à rendre ces pales plus tolérantes vis-à-vis de courants de foudre de forte intensité (environ 3 fois la valeur de l'intensité du courant de foudre considéré dans les normes antérieurement prises en compte pour la réalisation de telles pales). Selon les constats en utilisation, ces courants impactent statistiquement plus souvent les pales, et plus particulièrement les saumons d'extrémité des pales, à cause de leur forme naturellement protubérante vis-à-vis de l'ensemble de l'aéronef.

En particulier, l'invention a pour but de perfectionner le blindage connu par US-A-4,944,655 de manière à améliorer la tenue résiduelle après impact à la foudre, pour permettre la poursuite normale du vol et la qualité de la protection assurée par le blindage vis-à-vis des forces centrifuges le sollicitant lors de la rotation des rotors, ainsi que vis-à-vis des phénomènes de décollement qui peuvent se produire entre le blindage et la structure composite de la pale, en raison notamment des phénomènes de répulsion se développant entre eux lorsqu'une telle pale est foudroyée.

Un autre but de l'invention est d'assurer la tenue et la qualité de la protection, comme mentionné ci-dessus, à l'aide de moyens qui évitent ou minimisent les dommages qui pourraient être occasionnés à la structure composite de la pale en cas de foudroiement.

A cet effet, la pale à blindage de protection renforcée contre la foudre selon l'invention, ayant une structure composite et du type mentionné ci-dessus, est munie d'un blindage de protection contre la foudre comprenant :
- une coiffe de protection du bord d'attaque, ladite coiffe étant métallique, électriquement conductrice, et comprenant une aile d'extrados et une aile d'intrados, adjacentes le long du bord d'attaque et fixées sur des parties sous-jacentes des surfaces d'extrados et d'intrados,
- une enveloppe de protection dudit saumon de pale, ladite enveloppe coiffant au moins l'extrémité dudit saumon de pale et étant métallique, électriquement conductrice, et comprenant une aile d'extrados et une aile d'intrados qui s'étendent sur toute la corde d'extrémité dudit saumon de pale et sont appliquées sur des parties sous-jacentes desdites surfaces respectivement d'extrados et d'intrados au niveau du saumon, en étant relié en continuité électrique avec ladite coiffe, et
- des moyens électriquement conducteurs sur ledit pied de pale, et destinés à assurer la continuité électrique entre ladite coiffe et des moyens électriquement conducteurs dudit moyeu, pour la mise à la masse dudit blindage, et se caractérise en ce que ladite coiffe de bord d'attaque et ladite enveloppe du saumon de pale sont réalisées en une seule pièce, de préférence en tôle de titane, d'aluminium, d'acier inoxydable ou de nickel électroformé, qui est fixée par ladite enveloppe contre au moins la tranche d'extrémité de ladite structure composite au niveau dudit saumon de pale à l'aide de moyens de fixation au moins en partie électriquement conducteurs.

La réalisation d'une seule pièce de l'enveloppe avec la coiffe augmente la résistance à l'arrachement de l'enveloppe sous l'effet des forces centrifuges, cette résistance à l'arrachement étant encore améliorée par les moyens de fixation fixant cette enveloppe contre au moins la tranche du saumon de la pale. De plus, cette réalisation d'une seule pièce de la coiffe et de l'enveloppe ne nécessite pas de connexion électrique et de mise à la masse entre coiffe et enveloppe, ce qui permet d'éviter les risques de rupture statique et de fatigue de la connexion prévue entre ces deux pièces dans le brevet précité. Cela évite aussi l'adjonction de pièces intermédiaires électriquement conductrices, de type cavalier, qui sont susceptibles de se décoller et d'être éjectées en vol. En outre, la réalisation de la pièce unique constituant la coiffe et l'enveloppe de protection en tôle pliée de titane étiré, d'aluminium, ou d'acier inoxydable voire de nickel obtenu par électroformage est avantageusement simple et assure un bon écoulement du courant de foudre ainsi qu'une bonne protection à l'érosion.

Pour assurer une bonne cohésion du blindage métallique avec la structure composite de la pale en même temps qu'une bonne protection de cette structure composite à la tranche d'extrémité du saumon, les moyens de fixation comprennent au moins un adhésif, éventuellement électriquement conducteur, de type colle, résine sur film supporté ou non, assurant le collage de l'enveloppe contre au moins une partie de la tranche d'extrémité du saumon de pale et/ou une partie de l'une au moins desdites surfaces d'extrados et d'intrados de la structure composite, ladite coiffe adhérant également par collage à ladite structure composite, les ailes d'extrados et d'intrados de l'enveloppe étant de préférence collées sur toute leur surface sur les parties sous-jacentes des surfaces d'extrados et d'intrados de la structure composite.

Mais les moyens de fixation comprennent avantageusement de plus des moyens mécaniques présentant des formes protubérantes, telles que vis et rivets.

Ainsi, ces moyens mécaniques de fixation assurent la tenue et la qualité de la protection en cas de décollement en extrémité de pale, ce qui procure un aspect "fail safe" au collage prévu entre la structure composite de la pale et la pièce métallique unique formant coiffe et enveloppe. A noter que le caractère conducteur du collage n'est pas nécessairement avantageux. L'usage d'une colle diélectrique empêche le passage du courant de foudre par la colle selon l'envergure alors qu'un collage conducteur améliore la liaison en ce qui concerne l'écoulement du courant de foudre en assurant un meilleur contact électrique entre les pièces métalliques formant le blindage et est avantageusement complété par un rivetage ou un vissage pour améliorer encore la liaison entre la protection et la pale et l'écoulement du courant de foudre. En revanche, pour éviter le passage du courant dans les revêtements composites de type carbone par exemple, c'est-à-dire réputés électriquement conducteurs, il est préférable d'isoler ceux-ci du blindage, pour les protéger en utilisant une colle non conductrice. En outre, l'utilisation de moyens mécaniques de fixation présentant des formes protubérantes permet que ces moyens constituent, en raison de leurs formes, des points prédéterminés d'impacts ou de sortie de la foudre, de sorte que ces moyens protègent la structure composite environnante de la pale, d'autant plus que la mise à la masse de ces moyens mécaniques de fixation est assurée par l'enveloppe et la coiffe. Il en résulte une excellente protection contre les dommages qui pourraient être occasionnés à la structure composite entourant les moyens mécaniques de fixation, en cas de foudroiement.

Par ailleurs, on sait que les pales de rotor d'hélicoptères sont souvent munies, au saumon de pale, de vis fixées dans la tranche d'extrémité du saumon de pale, à proximité du bord d'attaque, et qui constituent par elles-mêmes des masses d'équilibrage et/ou de réglage dynamique et/ou sont utilisées pour fermer des boîtiers, logements ou cavités ménagés dans le saumon de pale et destinés à contenir des masses d'équilibrage et/ou de réglage dynamique.

Avantageusement, dans une pale selon l'invention, on profite de la présence de telles vis, et les moyens mécaniques de fixation de l'enveloppe contre au moins la tranche d'extrémité du saumon de pale comprennent au moins une telle vis d'équilibrage et/ou de fermeture d'un logement d'au moins une masse d'équilibrage et/ou de réglage dynamique, cette vis se vissant dans une zone de ladite tranche d'extrémité du saumon de pale qui est plus proche du bord d'attaque que du bord de fuite. L'enveloppe peut comprendre non seulement des ailes d'extrados et d'intrados, mais également une nervure d'extrémité, électriquement conductrice et reliant les ailes d'extrados et d'intrados, et qui s'étend sur toute la section de la tranche d'extrémité du saumon de pale, et est fixée contre cette tranche à l'aide de la ou des vis d'équilibrage. Cependant, cette réalisation impose que les dimensions de la pale et de l'enveloppe soient très précises pour assurer un accostage et un collage corrects des pièces entre elles. Dans une variante simplifiée de la pale selon l'invention, la vis ou chaque vis, éventuellement d'équilibrage, peut fixer contre la tranche d'extrémité du saumon de pale au moins une patte de l'enveloppe, qui prolonge l'une au moins des ailes d'extrados et d'intrados de ladite enveloppe, et est repliée par rapport auxdites ailes d'extrados et d'intrados de l'enveloppe.

Dans une variante intermédiaire, l'enveloppe comprend, pour relier ses ailes d'extrados et d'intrados, une nervure partielle d'extrémité, électriquement conductrice, en continuité électrique avec les ailes d'extrados et d'intrados de l'enveloppe, et s'étendant sur une partie, qui est adjacente au bord de fuite, de la section de la tranche d'extrémité du saumon.

Une telle nervure partielle, métallique et résistante, peut être réalisée simplement de différentes manières : à l'aide d'au moins un volet prolongeant l'une des ailes d'extrados et d'intrados de l'enveloppe et replié contre la tranche d'extrémité du saumon, dans sa partie adjacente au bord de fuite, le volet étant également fixé à l'autre des ailes d'extrados et d'intrados du saumon par une liaison électriquement conductrice, par exemple par soudage. La nervure partielle d'extrémité peut aussi comprendre un double volet prolongeant l'une des ailes d'extrados et d'intrados de l'enveloppe, et dont une partie est repliée contre la tranche d'extrémité du saumon, dans sa partie adjacente au bord de fuite, tandis que l'autre partie du volet est contre-coudée et fixée de manière électriquement conductrice, par exemple à l'aide de rivets, contre un autre volet qui prolonge l'autre des ailes d'extrados et d'intrados de l'enveloppe, et qui fait saillie, selon l'envergure, au-delà de la tranche d'extrémité du saumon de pale.

Que la nervure d'extrémité soit complète ou partielle, elle permet d'améliorer la protection à la foudre en respectant sensiblement l'intégrité, selon l'envergure, de la structure composite de la pale et celle des ailes d'extrados et d'intrados de l'enveloppe elle-même.

L'enveloppe peut être rendue solidaire de la structure composite de la pale à l'aide d'un ancrage mécanique qui peut s'ajouter ou se substituer à une fixation par au moins une vis d'équilibrage, et qui comprend au moins une pièce mince en forme d'ailette, électriquement conductrice, solidaire de la structure composite qu'elle prolonge en saillie, selon l'envergure, vers l'extérieur du saumon de pale.

Si l'enveloppe comporte une nervure au moins partielle d'extrémité électriquement conductrice et en continuité électrique avec les ailes d'extrados et d'intrados de l'enveloppe, il est alors avantageux que cette nervure soit percée d'au moins une fente, traversée par au moins une ailette conductrice, dont la portion en saillie à l'extérieur de la nervure est repliée au moins en partie contre la nervure, de préférence une moitié de cette portion étant repliée vers l'aile d'extrados et l'autre moitié vers l'aile d'intrados de l'enveloppe, afin de maintenir la nervure appliquée contre la tranche d'extrémité de la pale.

Si l'enveloppe ne comporte pas de nervure, mais si ses ailes d'extrados et d'intrados sont prolongées chacune par l'une respectivement d'au moins deux pattes en regard, ces pattes peuvent être repliées contre la tranche d'extrémité du saumon de pale et leurs parties d'extrémité libre contre-coudées et fixées, par collage de préférence conducteur et/ou par rivetage ou vissage, contre deux faces opposées d'au moins une ailette conductrice.

Un intérêt de cette liaison, de préférence collée et rivetée, incorporant au moins une ailette conductrice non repliée et restant en débordement par rapport à l'extrémité de la pale, est que la protubérance métallique ainsi réalisée avec les parties de pattes fixées à l'ailette constitue un point d'entrée ou de sortie privilégié pour la foudre, et qui protège ainsi les revêtements composites adjacents d'un impact direct de la foudre sans pour autant perturber l'écoulement aérodynamique, car cette protubérance est placée vers le bord de fuite plutôt que vers le bord d'attaque de la pale. Ce débordement peut, de plus, servir de repère de marquage pour le réglage dynamique, appelé "track", des rotors.

De plus, les deux variantes qui précèdent sont avantageusement compatibles avec un montage de l'enveloppe sur la pale composite par translation dans le sens longitudinal (selon l'envergure) de l'enveloppe déplacée vers le pied de pale. Ces variantes permettent également d'avoir un ancrage mécanique de l'enveloppe sur la pale dans le cas d'une tranche mince, à faible corde, dans laquelle une vis en extrémité ne peut être mise en place, de sorte que la trappe d'accès aux masses d'équilibrage est par exemple disposée sur l'extrados.

Pour que la tenue et la qualité de la protection procurées par l'enveloppe soient assurées, en cas de décollement du saumon de pale, sur toute la corde de ce dernier, les moyens mécaniques de fixation avantageusement comprennent également au moins un rivet fixant l'une au moins des ailes d'extrados et d'intrados de l'enveloppe contre l'une au moins desdites surfaces d'extrados et d'intrados au niveau du saumon de pale, dans une zone voisine du bord de fuite, et/ou dans une zone voisine du bord d'attaque.

Pour améliorer le passage du courant de foudre dans l'enveloppe, vers la coiffe et dans cette dernière, il est en outre avantageux que l'une au moins, mais de préférence chacune des ailes d'extrados et d'intrados de l'enveloppe présente une ou plusieurs des conditions géométriques suivantes :
- cette aile a une dimension et/ou section de matière, selon l'envergure, qui est plus grande dans la zone voisine du bord d'attaque que dans la zone voisine du bord de fuite, et/ou qui n'est pas sensiblement inférieure, dans sa zone voisine du bord d'attaque, à la dimension et/ou section de matière, selon la corde, de la zone adjacente de l'aile correspondante d'extrados ou d'intrados de la coiffe,
- cette aile présente une dimension et/ou section de matière, selon l'envergure, qui se réduit sensiblement progressivement d'une zone voisine du bord d'attaque à une zone voisine du bord de fuite, puis qui augmente dans une zone directement adjacente au bord de fuite et jusqu'à ce dernier, pour la fixation par au moins un rivet dans cette zone voisine du bord de fuite,
- cette aile présente, dans sa zone voisine du bord d'attaque, un bord s'étendant sur la surface d'extrados ou d'intrados correspondante et qui se raccorde par une partie concave avec un rayon de raccordement au bord correspondant de l'aile d'extrados ou d'intrados correspondante de la coiffe,
- cette aile a, au moins dans sa zone voisine du bord d'attaque, une épaisseur ou section transversale développée qui est au moins égale ou supérieure à celle de l'aile correspondante d'extrados ou d'intrados de la coiffe dans sa zone adjacente de l'enveloppe, ce qui de plus améliore la résistance à l'érosion de l'enveloppe, exposé, en rotation, à une vitesse relative plus importante que le reste de la pale, la masse accrue de l'enveloppe dans cette zone éventuellement surépaissie permettant également de recentrer la pale par rapport à son axe longitudinal de changement de pas.

Pour faciliter la réalisation de la pièce unique de blindage formant coiffe et enveloppe, ces dernières peuvent avoir des ailes d'extrados ayant sensiblement les mêmes dimensions que leurs ailes d'intrados, selon la corde et l'envergure de la pale. Les ailes d'extrados et d'intrados sur l'enveloppe et la coiffe sont alors sensiblement symétriques l'une de l'autre par rapport au plan de corde de la pale.

Toutefois, pour améliorer la tenue de la protection assurée par le blindage à l'encontre des phénomènes de décollement se développant entre le blindage et la structure composite de la pale sous l'effet des forces de répulsion pouvant solliciter les ailes d'extrados et d'intrados de la coiffe et de l'enveloppe lorsque la pale est foudroyée, la coiffe et l'enveloppe ont avantageusement des ailes d'extrados ayant des dimensions différentes de celles de leurs ailes d'intrados, selon la corde (surtout pour la coiffe) et/ou l'envergure (surtout pour l'enveloppe) de la pale.

On sait en effet que le passage d'un courant électrique de l'extrémité d'une aile d'un corps conducteur recourbé en U jusqu'à l'extrémité de l'autre aile s'accompagne de l'apparition sur les ailes de forces répulsives d'origine magnétique, issues des composantes antagonistes du vecteur de courant et d'autant plus importantes que l'intensité du courant est élevée et le rayon de courbure du corps est faible. La réalisation d'ailes d'extrados et d'intrados dissymétriques, par rapport au plan de corde de la pale, sur la coiffe et l'enveloppe de protection permet d'éviter les décollements locaux, par rapport à la structure composite, des ailes de la coiffe et de l'enveloppe dans leur zone voisine du bord d'attaque et des ailes de l'enveloppe dans leur zone voisine du bord de fuite.

Ainsi, on donne à l'aile d'intrados de la coiffe une largeur, selon la corde, supérieure à celle de son aile d'extrados si l'on recherche simultanément une meilleure tenue à l'érosion à la pluie et au sable, tandis qu'une largeur, selon la corde, de l'aile d'extrados supérieure à celle de l'aile d'intrados de la coiffe procure une meilleure protection vis-à-vis des probabilités d'impacts de foudre lorsque cette zone est normalement tournée vers l'extérieur amont de l'aéronef, cette enveloppe de protection étant avantageusement intégrée à l'intérieur du profil aérodynamique.

Pour les mêmes raisons, l'enveloppe a des ailes d'extrados et d'intrados dont les dimensions sont avantageusement différentes au moins selon l'envergure de la pale. Avantageusement, les bords des ailes d'extrados et d'intrados de l'enveloppe, qui s'étendent sur les surfaces d'extrados et d'intrados, évoluent parallèlement l'un à l'autre en étant décalés l'un par rapport à l'autre selon l'envergure de la pale, en suivant une ligne polygonale ou avec une courbure continue.

La pale peut avoir un saumon droit, c'est-à-dire dont la tranche d'extrémité s'étend, du bord d'attaque au bord de fuite, dans un plan sensiblement perpendiculaire à l'axe longitudinal de la pale, en général situé au quart avant de la corde à partir du bord d'attaque, mais la pale peut également être munie d'un saumon tronqué sur au moins une partie de la corde, et présentant un bord d'attaque incliné vers le bord de fuite et vers l'extrémité du saumon, le bord d'attaque du saumon pouvant être rectiligne et présenter un angle de flèche par rapport au bord d'attaque de la partie courante, ou encore avoir une forme parabolique. Dans ce cas, l'enveloppe présente un bord d'attaque incliné, de même forme que celui du saumon, et le long duquel ses ailes d'extrados et d'intrados sont adjacentes, et de préférence solidaires l'une de l'autre. Une enveloppe à bord d'attaque rectiligne incliné en flèche présente l'avantage que ses ailes d'extrados et d'intrados et, selon les cas, son ou ses pattes et/ou volets pliables par rapport aux ailes d'extrados et d'intrados pour la fixation à la tranche d'extrémité du saumon, donne(nt) à l'enveloppe une forme développable qui, à l'extrémité de la coiffe ayant elle-même une forme développable permet de réaliser le blindage métallique en une seule pièce continue de tôle préalablement découpée aux dimensions requises et ne nécessitant que deux pliages successifs, le premier pour former les ailes d'extrados et d'intrados de la coiffe et le second pour former les ailes correspondantes de l'enveloppe. La fixation de l'enveloppe par des moyens mécaniques sur le saumon peut être assurée, comme mentionné ci-dessus, par une ou deux vis n'assurant pas forcément une fonction d'équilibrage ou de fermeture de boîtiers d'équilibrage, et fixant au moins une patte de l'enveloppe contre la tranche d'extrémité du saumon, ainsi que par un ou plusieurs rivets fixant les ailes d'extrados et d'intrados de l'enveloppe sur la structure composite sous-jacente de la pale dans des zones voisines des bords d'attaque et de fuite.

Les moyens électriquement conducteurs du pied de pale, qui assurent la continuité électrique entre la coiffe et le moyeu, peuvent comprendre, par analogie avec les réalisations classiques précitées de protection de pales contre la foudre, au moins un clinquant ou ruban et/ou une tresse métallique électriquement conducteur s'étendant depuis l'extrémité de la coiffe qui est la plus proche du pied de pale, jusqu'à un point fixe du pied de pale et fixé(e) à ce dernier par collage et/ou rivetage ou vissage. Toutefois, dans une pale selon l'invention, il est avantageux que ces moyens électriquement conducteurs du pied de pale comprennent un prolongement continu de ladite coiffe qui protège une partie dudit pied de pale venant dans le prolongement du bord d'attaque jusqu'à proximité desdits moyens d'attache de la pale, ledit prolongement de la coiffe étant fixé en au moins un point contre ledit pied de pale par des moyens mécaniques de fixation, du type vis ou rivets et/ou par un adhésif, éventuellement conducteur. Ces moyens mécaniques de fixation du prolongement de la coiffe contre le pied de pale assurent ainsi la tenue et la qualité de la protection en cas de décollement du blindage au niveau de l'emplanture de la pale.

Lorsque les moyens d'attache de la pale au moyeu ou à un organe de liaison au moyeu comprennent, sur le pied de pale, au moins une douille d'attache métallique et électriquement conductrice, et plus couramment deux douilles parallèles, selon une variante, ledit prolongement continu de la coiffe peut s'étendre avantageusement jusqu'à être en liaison directe avec la ou les douilles d'attache. Ceci rend inutile la présence de plots et/ou tresses de métallisation qui sont utilisés dans les blindages classiques des pales contre la foudre.

Pour d'autres types d'attaches de pale, telles que fourche, lame torsible, mono enroulement, non spécifiquement décrits car bien connus, un prolongement continu analogue est avantageusement réalisé. Ce prolongement conducteur peut être associé ou remplacé par un clinquant ou une tresse de métallisation, une bonne continuité électrique entre le clinquant et la tresse et la coiffe étant assurée par un collage conducteur associé à un rivetage ou un vissage ou autre moyen mécanique de fixation, de façon à éviter tout phénomène de répulsion. De même, les sections de matière des différents composants conducteurs sont dimensionnées de façon à conserver un écoulement des charges électriques optimal avec le moins de pertes par effet Joule à l'origine d'échauffements et de décollements locaux.

Avantageusement en outre, pour que l'entrée et/ou la sortie de la foudre s'effectue de manière à protéger la structure composite au niveau du saumon de pale, il est avantageux que l'enveloppe présente une extrémité de fuite qui déborde en saillie au-delà du bord de fuite de la pale, au même titre que le volet, pour réaliser un point privilégié d'entrée ou de sortie de la foudre.

Lorsque les fibres de renfort de la structure composite de la pale comprennent des fibres de carbone, il est en outre avantageux que la pale comprenne, au moins entre sa partie courante et la coiffe de bord d'attaque, une coiffe sous-jacente, de préférence diélectrique, telle que composite à matrice synthétique et fibres de renfort en verre, qui isole avantageusement la coiffe de bord d'attaque du matériau composite à fibres de carbone, pour tenir compte du caractère électriquement conducteur de ces fibres, qui rend tout composite les comportant particulièrement sensible à l'endommagement par la foudre.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue schématique en plan d'une pale de rotor arrière avec blindage de protection contre la foudre,
- la figure 2 représente en élévation latérale l'extrémité du saumon de la pale de la figure 1, à plus grande échelle,
- la figure 3 est une vue analogue à la figure 1 pour une première variante de réalisation,
- la figure 4 représente partiellement, en plan et à plus grande échelle, uniquement le saumon de pale d'une seconde variante de pale à extrémité droite,
- la figure 5 est une coupe schématique éclatée selon V-V de la figure 4,
- la figure 6 représente schématiquement et partiellement en plan uniquement la partie d'une troisième variante de pale correspondant au pied de pale et à une portion adjacente de la partie courante,
- la figure 7 représente schématiquement en plan une quatrième variante de réalisation,
- les figures 8 et 9 sont des vues analogues respectivement aux figures 4 et 2 pour une cinquième variante de pale,
- les figures 10, 10a, 11 et 11a sont des vues partielles en perspective de quatre variantes de la pale des figures 8 et 9,
- la figure 12 est une vue schématique en coupe partielle selon XII-XII de la figure 11,
- la figure 13 est une vue en plan schématique et partielle d'une autre variante de pale, avec saumon tronqué,
- la figure 14 est une vue schématique en plan d'une pièce de tôle prédécoupée aux cotes d'un blindage développable pour une pale à saumon en flèche, et
- la figure 15 est une vue analogue à la figure 14 de la tôle de blindage pliée pour former la coiffe et l'enveloppe de protection.

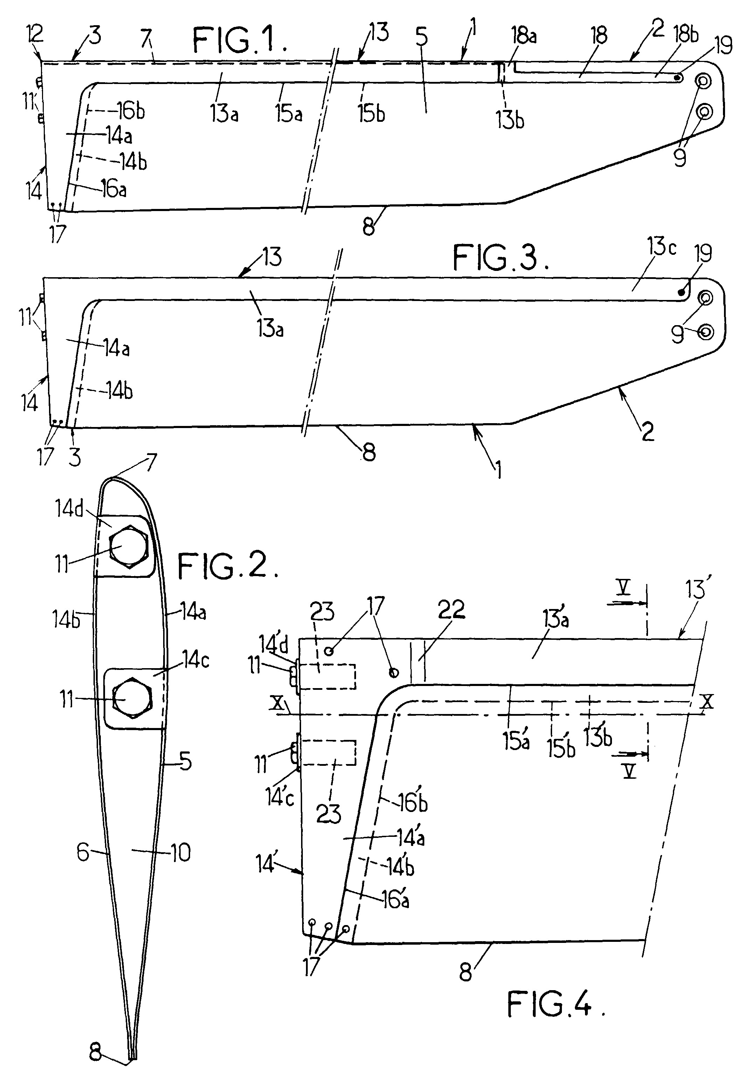

La pale des figures 1 et 2 est une pale de rotor arrière d'hélicoptère, essentiellement constituée d'une structure en matériau composite à matrice synthétique (par exemple une résine thermodurcissable) renforcée de fibres minérales et/ou organiques (par exemple de verre, carbone ou aramides), formant une partie courante 1, profilée au profil aérodynamique souhaité, se prolongeant, à une extrémité destinée à être fixée à un moyeu de rotor, par un pied de pale 2 ayant, dans cet exemple, une forme en plan trapézoïdal, tandis que l'extrémité opposée de la partie courante 1 constitue un saumon de pale 3.

La structure composite de la pale, qui forme sa partie courante 1, et qui peut se prolonger plus ou moins complètement dans le pied de pale 2, peut être toute structure connue, par exemple mono ou multi-longeron en stratifils de fibres unidirectionnelles agglomérées par une résine d'imprégnation, et coopérant avec des surfaces d'extrados 5 et d'intrados 6 constituées de revêtements stratifiés de couches de fibres agglomérées par la résine (par exemple des tissus de fibres ou nappes de fibres), pour constituer une structure mono ou multi-caisson éventuellement remplie, entre le ou les longerons et les revêtements stratifiés d'extrados et d'intrados, de corps de remplissage en mousse synthétique.

La figure 1 montre que la partie courante profilée 1 de la pale présente une forme en plan sensiblement rectangulaire, de sorte que les bords d'attaque 7 et de fuite 8, entre lesquels s'étendent, selon la corde de la pale, les surfaces d'extrados et d'intrados 5 et 6, sont sensiblement parallèles l'un à l'autre.

Par la grande base de sa forme en plan en trapèze rectangle, le pied de pale 2 est adjacent à la partie courante 1 et présente, à ce niveau, une corde égale à celle sensiblement constante de la partie courante 1, sauf au niveau du saumon de pale 3 où la corde diminue légèrement de valeur. Du côté de sa petite base, c'est-à-dire du côté destiné à être tourné vers le moyeu du rotor, le pied de pale 2 comporte des moyens d'attache de la pale, constitués (figures 1, 3, 6 et 7) de deux douilles 9 métalliques et électriquement conductrices, parallèles, et traversant le pied de pale 2 dans son épaisseur perpendiculairement au plan de la figure 1. Ces deux douilles 9 permettent, de manière connue, le rattachement de la pale, à l'aide de deux axes les traversant, par exemple dans une chape d'extrémité radiale externe (par rapport à l'axe de rotation du moyeu) d'un organe de liaison de la pale au moyeu, lequel organe peut être, de manière connue, constitué dans sa partie centrale en manchon et comporter une partie d'extrémité radiale interne également en chape reliée au moyeu par des moyens de retenue et d'articulation, tels qu'une butée sphérique lamifiée, selon un montage bien connu, qui ne nécessite pas d'être davantage décrit ni représenté.

D'autres types connus d'attaches de pale (fourche, lame torsible, mono enroulement, etc ...) sont compatibles avec l'adaptation d'une coiffe et d'une enveloppe d'extrémité tels que décrits ci-dessous pour la protection de la pale contre la foudre.

De manière également connue, la structure de la pale présente, dans le saumon de pale 3, des boîtiers ou logements (tels que représentés en 23 sur la figure 4) de masses d'équilibrage et/ou de réglage dynamique qui s'ouvrent dans la tranche d'extrémité 10 (voir figure 2) du saumon de pale 3, pour l'introduction ou le retrait desdites masses, et qui sont fermés par deux vis 11, constituant elles-mêmes des masses d'équilibrage, et qui se vissent dans la moitié de cette tranche 10 qui est voisine du bord d'attaque 7. Plus généralement, ces boîtiers peuvent être situés soit vers l'extrados, soit vers l'intrados de la pale et accessibles par des trappes d'accès dans l'extrados ou l'intrados du profil en zone d'extrémité.

La pale ci-dessus décrite est protégée contre la foudre par un blindage, qui comprend essentiellement une pièce métallique et électriquement conductrice 12, réalisée en acier inoxydable ou par étirage et conformation d'une tôle de titane, ou plus généralement tout autre matériau métallique bon conducteur de l'électricité (nickel électroformé, par exemple) et non fragile vis-à-vis de l'érosion au sable et à la pluie, et constituant simultanément, d'une part, une coiffe 13 de protection du bord d'attaque 7 de la partie courante 1, et, d'autre part, une enveloppe 14 coiffant le saumon de pale 3 et s'étendant sur toute la corde de ce dernier. La coiffe 13, analogue aux coiffes classiques de protection du bord d'attaque des pales contre l'érosion, et assurant effectivement cette protection contre l'érosion, présente une section transversale sensiblement en U, définie par une aile d'extrados 13a et une aile d'intrados 13b, qui sont adjacentes l'une à l'autre le long du bord d'attaque 7 recouvert par la coiffe 13, et qui s'étendent respectivement sur des parties adjacentes à ce bord d'attaque 7, des surfaces d'extrados 5 et d'intrados 6 de la partie courante 1, auxquelles la coiffe 13 est solidarisée par collage.

Les ailes 13a et 13b ont sensiblement la même largeur, mesurée selon la corde et selon l'envergure malgré la dissymétrie de l'enveloppe 14, comme décrit ci-dessous, de sorte que les ailes 13a et 13b de la coiffe 13 sont sensiblement symétriques l'une de l'autre par rapport au plan de corde de la pale.

L'enveloppe 14, qui recouvre le saumon de pale 3 jusqu'au bord de fuite 8, comprend une aile d'extrados 14a qui prolonge selon l'envergure et surtout selon la corde, avec une forme en plan sensiblement trapézoïdale, l'aile d'extrados 13a de la coiffe 13 du bord d'attaque. L'enveloppe 14 comprend également une aile d'intrados 14b, qui prolonge, de manière similaire, l'aile d'intrados 13b de la coiffe 13, en étant sensiblement de même forme trapézoïdale, mais plus large, selon l'envergure et à partir de la tranche d'extrémité, que l'aile d'extrados 14a. Les bords 16a et 16b, tournés vers le pied de pale 2, des ailes d'extrados et d'intrados 14a et 14b de l'enveloppe 14 se raccordent respectivement aux bords 15a et 15b, s'étendant sur les surfaces d'extrados 5 et d'intrados 6, des ailes d'extrados et d'intrados 13a et 13b de la coiffe 13 par une partie concave, à concavité tournée vers le bord de fuite 8 et arrondie avec un rayon de raccordement. Les bords 16a et 16b des ailes 14a et 14b de l'enveloppe 14 sont, en dehors de leur partie concave de raccordement aux bords 15a et 15b, sensiblement rectilignes et parallèles l'un à l'autre, en étant décalés l'un de l'autre selon l'envergure de la pale du fait que l'aile d'intrados 14b est plus large, selon l'envergure, que l'aile d'extrados 14a, en tout point pris le long de la corde. Chacune des ailes 14a et 14b de l'enveloppe 14 présente ainsi une largeur, selon l'envergure, qui est supérieure à la largeur, selon la corde, de l'aile 13a ou 13b de la coiffe 13 à laquelle elle se raccorde, dans sa zone voisine du bord d'attaque 7, pour faciliter, dans cette zone, le passage du courant de foudre selon l'envergure comme selon la corde. De plus, chaque aile 14a et 14b a une largeur, selon l'envergure, qui diminue progressivement de sa zone voisine du bord d'attaque 7 juqu'au bord de fuite 8. Cependant, dans leur zone voisine du bord de fuite, les ailes 14a et 14b conservent une largeur suffisante, selon l'envergure, pour que chacune des ailes 14a et 14b puisse être fixée à la partie sous-jacente de la structure composite de la pale par au moins un et de préférence deux rivets 17.

Comme montré sur la figure 2, l'enveloppe 14 comprend également deux pattes 14c et 14d qui sont dans le prolongement, la première 14c, de la zone médiane, selon la corde, de l'aile d'extrados 14a de l'enveloppe 14, et, la seconde 14d, de la zone voisine du bord d'attaque 7 de l'aile d'intrados 14b de l'enveloppe 14, ces deux pattes 14c et 14d étant repliées par rapport à ces ailes 14a et 14b et appliquées contre la tranche d'extrémité 10 du saumon de pale 3, sur lequel chacune des deux pattes 14c et 14d est fixée par l'une respectivement des deux vis 11 d'équilibrage. Ainsi, les pattes 14c et 14d de l'enveloppe 14 sont en contact direct, et donc en continuité électrique, avec ces vis 11 métalliques et électriquement conductrices, dont les têtes font saillie à l'extérieur de la tranche d'extrémité 10 du saumon de pale 3, et dont les tiges sont engagées dans la structure composite environnante de la partie courante de la pale 1.

Avant la pose des vis 11 et des rivets 17, le blindage 12 est collé à chaud ou encore à froid ou à tiède à la structure composite de la pale, soit simultanément à la polymérisation de la matrice de cette structure composite, par une opération de co-cuisson, soit postérieurement à cette polymérisation. La cohésion de l'enveloppe 14 avec le saumon de pale 3 est assurée par collage des ailes 14a et 14b contre les surfaces d'extrados et d'intrados 5 et 6, et ses pattes 14c et 14d contre la tranche d'extrémité 10 du saumon 3.

Les vis 11 et rivets 17 complètent la fixation de l'enveloppe 14 sur la structure composite de la pale et assurent ainsi la tenue et la qualité de la protection métallique du saumon de pale 3 en cas de décollement, à ce niveau, entre l'enveloppe 14 de la pièce métallique 12 et la structure composite de la pale, que ce décollement résulte principalement des forces centrifuges et/ou aérodynamiques, lors de la rotation du rotor, ou d'un foudroiement de la pale, développant des forces répulsives sur les ailes 14a et 14b de l'enveloppe 14. Comme ces ailes 14a et 14b sont dissymétriques du fait de leur largeur différente, selon l'envergure, l'aile d'intrados 14b la plus large est moins sollicitée par ces forces répulsives, et l'enveloppe 14 est relativement protégée contre les décollements de ses ailes 14a et 14b. Grâce aux pattes 14c et 14d ainsi qu'aux ailes d'extrados et d'intrados 14a et 14b de l'enveloppe 14, les vis 11 et les rivets 17 métalliques et électriquement conducteurs sont mis à la masse, pour éviter les dommages pouvant être occasionnés à la structure composite environnante, entourant ces vis 11 et rivets 17, en cas de foudroiement, le courant de foudre étant évacué par l'enveloppe 14 et la coiffe 13, puis vers le moyeu par des moyens décrits ci-dessous. Il faut noter qu'en raison de leurs formes protubérantes, les vis 11 et rivets 17 constituent des points prédéterminés d'impacts ou de sortie de la foudre, et protègent ainsi la structure composite environnante de la pale.

La mise à la masse du blindage comprenant l'unique pièce métallique 12, constituant la coiffe 13 et l'enveloppe 14, ainsi que les vis 11 et rivets 17, et dont tous les éléments sont électriquement conducteurs, est assurée par un ruban 18 métallique, électriquement conducteur, qui s'étend sur la surface d'extrados du pied de pale 2 en étant solidaire, par une extémité 18a, de l'extrémité de la coiffe 13 du côté du pied de pale 2, et fixé, par son autre extrémité 18b et à l'aide d'une vis ou d'un rivet 19, sur le pied de pale 2 à proximité immédiate des douilles d'attache 9, de sorte qu'après le montage de la pale dans la chape réceptrice du manchon de liaison au moyeu, le ruban conducteur 18 est en continuité électrique par son extrémité 18b avec des pièces métalliques et électriquement conductrices du manchon de liaison au moyeu et du moyeu. Un ruban conducteur tel que 18 peut être monté de manière similaire sur la surface d'extrados ou d'intrados du pied de pale 2.

La variante de la figure 3 ne se distingue de l'exemple décrit ci-dessus en référence aux figures 1 et 2 que par les moyens assurant la mise à la masse du blindage au niveau du pied de pale 2. A cet effet, le ruban conducteur 18 de la figure 1 est supprimé et remplacé avantageusement par un prolongement continu 13c de la coiffe 13 de bord d'attaque, qui s'étend sur le bord d'attaque du pied de pale 2, dans le prolongement du bord d'attaque de la partie courante 1, et de sorte que l'extrémité de la coiffe 13, du côté opposé à l'enveloppe 14, est fixée à proximité immédiate des deux douilles d'attache 9 par une vis ou un rivet 19 dans chacune des ailes d'extrados et d'intrados de la coiffe 13 prolongée. Ces vis ou rivets assurent, au niveau du pied de pale 2, la tenue et la qualité de la protection métallique en cas de décollement à ce niveau entre le prolongement 13c de la coiffe 13 et la structure sous-jacente, au moins partiellement composite, du pied de pale 2.

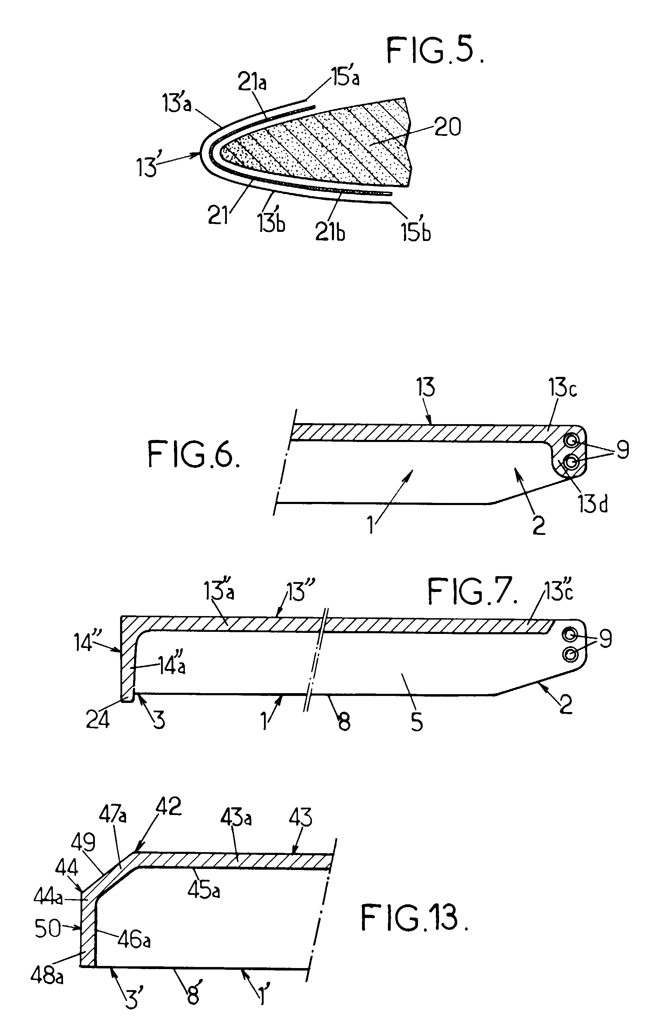

Selon l'autre variante de la figure 6, le prolongement 13c de la coiffe 13, qui recouvre tout le bord d'attaque du pied de pale 2, se prolonge lui-même, du côté de l'extrados, par une plaque d'extrémité 13d, et, de préfrence également du côté de l'intrados, par une plaque d'extrémité analogue (non représentée), et les deux plaques telles que 13d sont en contact direct avec les douilles d'attache 9. Ces douilles 9 participent ainsi à la mise à la masse du blindage de protection contre la foudre. Le passage du courant de foudre est ainsi assuré, depuis l'enveloppe 14, par la coiffe 13 et son prolongement 13c de pied de pale 2, puis par les plaques telles que 13d, les douilles d'attache 9, les axes de fixation de ces douilles dans la chape radiale externe du manchon de liaison au moyeu, et ensuite par ce manchon et jusqu'aux parties métalliques du moyeu.

La variante des figures 4 et 5 se distingue des exemples décrits précédemment par plusieurs différences d'importance inégale. La plus importante est que la coiffe 13' a une aile d'intrados 13'b plus large, selon la corde, que son aile d'extrados 13'a. Le bord arrière 15'b de l'aile 13'b, qui se prolonge par un arrondi de rattachement au bord interne 16'b de l'aile d'intrados 14'b de l'enveloppe 14', est donc décalé vers le bord de fuite 8 par rapport au bord arrière 15'a de l'aile d'extrados 13'a, ce bord arrière 15'a se rattachant, comme sur la figure 1, par un arrondi au bord interne 16'a de l'aile d'extrados 14'a de l'enveloppe 14', et le bord 16'a étant parallèle au bord 16'b mais décalé selon l'envergure vers l'extrémité de la pale.

Dans cette variante, la dissymétrie, par rapport au plan de corde de la pale, entre les ailes d'extrados 13'a et 14'a et d'intrados 13'b et 14'b de la coiffe 13' et de l'enveloppe 14', résultant de leurs dimensions différentes selon la corde et/ou selon l'envergure de la pale, est une caractéristique particulièrement favorable, dont les conséquences sont décrites ci-dessous en référence à la figure 5 pour la coiffe 13'.

En cas de foudroiement de la pale, si le courant de foudre se déplace de l'un des bords arrière 15'a et 15'b vers l'autre en passant par le bord d'attaque de la coiffe 13', il apparait sur les ailes 13'a et 13'b des forces répulsives, d'origine magnétique, issues des composantes antagonistes du vecteur de courant, et qui sont d'autant plus importantes que l'intensité du courant est élevée et que le rayon de courbure de la coiffe 13' est faible. Ces forces répulsives tendent à écarter les ailes 13'a et 13'b l'une de l'autre, et donc à les arracher de la structure composite repérée dans son ensemble en 20 sur la figure 5, et sur laquelle ces ailes 13'a et 13'b sont collées, comme mentionné ci-dessus. Par contre, lorsque le courant de foudre se déplace du bord d'attaque de la coiffe 13 sur chaque aile 13'a et 13'b vers le bord arrière 15'a ou 15'b de cette aile, les forces qui se développent sur les ailes 13'a et 13'b tendent à les resserrer l'une vers l'autre, ce qui produit un effet favorable à la cohésion de la coiffe 13' sur la structure composite 20.

Lorsque les deux ailes de la coiffe ont la même largeur, selon la corde, les forces répulsives se développant dans le cas mentionné ci-dessus produisent un effet défavorable à la cohésion de la coiffe sur la structure composite, puisqu'elles tendent à décoller les ailes d'intrados et d'extrados de cette coiffe.

Par contre, sur la figure 5, comme l'une 13'b des ailes de la coiffe 13' a une largeur (selon la corde) supérieure à celle de l'autre 13'a, il en résulte sur l'aile la plus large 13'b une zone favorable, délimitée entre son bord arrière 15'b et la projection sur l'aile 13'b du bord arrière 15'a de l'autre aile 13'a, et grâce à laquelle les forces répulsives sollicitant la zone défavorable délimitée entre le bord d'attaque de la coiffe 13' et le bord arrière 15'a ou sa projection sur l'aile 13'b, ne sont pas suffisantes pour provoquer un décollement local des ailes 13'a et 13'b, en particulier de l'aile la plus large 13'b.

Dans cette réalisation, dans laquelle l'aile d'intrados 13'b est la plus large, l'aile d'extrados 13'a est plus sollicitée que l'aile d'intrados 13'b, laquelle assure simultanément une meilleure tenue à l'érosion à la pluie et au sable.

En variante, il est bien entendu possible de donner à l'aile d'extrados 13'a une largeur supérieure à celle de l'aile d'intrados 13'b. Dans ce cas, on obtient une excellente adhérence au niveau du bord arrière 15'a, le plus reculé vers le bord de fuite, de l'aile d'extrados 13'a, qui est moins sollicitée que l'aile d'intrados 13'b, la grande largeur de l'aile d'extrados 13'a ayant simultanément pour effet d'assurer un meilleur écoulement aérodynamique à l'extrados de la pale, si l'enveloppe 13' est rapportée sur le profil aérodynamique d'origine, mais elle peut constituer aussi une meilleure protection vis-à-vis d'impacts dûs à la foudre venant de l'extérieur amont de l'aéronef.

Les mêmes phénomènes se produisent sur l'enveloppe 14', comme d'ailleurs sur l'enveloppe 14 des variantes décrites ci-dessus, en raison de la dissymétrie de ses ailes d'extrados et d'intrados due à leur différence de largeur selon l'envergure de la pale.

Une autre différence, également décrite en référence à la figure 5, est que, lorsque la structure composite 20 de la pale comprend des fibres de renfort en carbone, qui sont électriquement conductrices alors que la matrice synthétique du matériau composite est isolante, on place avantageusement sous la coiffe 13' de bord d'attaque, une coiffe 21 sous-jacente diélectrique, pour isoler la structure composite 20 de la pale de sa coiffe 13' conductrice de bord d'attaque. Dans ce cas, la coiffe diélectrique sous-jacente ou sous-coiffe 21 peut être réalisée avantageusement en matériau composite avec la même matrice synthétique que le reste de la structure composite 20 de la pale et des fibres de renfort en verre, et avoir des ailes d'extrados 21a et d'intrados 21b au moins aussi larges, selon la corde, que les ailes d'extrados 13'a et d'intrados 13'b respectivement de la coiffe 13', la cohésion de la sous-coiffe 21 avec la structure composite 20 étant assurée par la polymérisation de cette structure 20.

Lorsque la structure composite de la pale ne comporte que des fibres de renfort en verre ou aramides, non électriquement conductrices, il est préférable de prévoir une telle sous-coiffe diélectrique, pour isoler le revêtement travaillant de la pale vis-à-vis d'autres impératifs ou d'autres équipements installés tels que des dégivreurs de pale.

Une autre différence est que l'aile d'intrados 14'b de l'enveloppe 14' est, dans sa zone voisine du bord de fuite 8, suffisamment large (selon l'envergure) pour être fixée à la structure composite sous-jacente de la pale par trois rivets 17, alors que la zone de l'aile d'extrados 14'a voisine du bord de fuite 8 est fixée, par exemple, par deux rivets 17, comme dans les exemples précédents. De plus, chacune des ailes d'extrados 14'a et d'intrados 14'b est également fixée, dans sa zone voisine du bord d'attaque, à la structure composite sous-jacente par deux autres rivets 17.

Enfin, l'aile d'extrados 13'a de la coiffe 13' peut se raccorder, selon l'envergure de la pale, à l'aile d'extrados 14'a de l'enveloppe 14' par un redan 22 aménagé en rampe qui s'éloigne de la surface d'extrados 5 de la pale dans le sens allant de la coiffe 13' à l'enveloppe 14'. Selon la corde, ce redan 22 peut s'étendre sur toute la largeur de l'aile d'extrados 13'a de la coiffe 13'. De manière non représentée, l'aile d'intrados 13'b de la coiffe 13' peut se raccorder de la même manière à l'aile d'intrados 14'b de l'enveloppe 14' par un redan analogue. Le redan 22 correspond à une augmentation d'épaisseur de l'enveloppe 14' dans sa zone voisine du bord d'attaque. L'augmentation de masse qui en résulte permet de recentrer la pale par rapport à son axe longitudinal de changement de pas XX, au quart avant selon la corde à partir du bord d'attaque. De plus, l'enveloppe 14' est ainsi plus résistante à l'érosion, compte tenu qu'elle est exposée, en rotation, à une vitesse relative plus importante. Cette compensation peut s'effectuer directement, en variante, par variation, des positions des masses internes aux boîtiers d'équilibrage ou indirectement en intégrant un contrepoids dans la structure avant de la pale (déplacement des masses, de préférence, de l'arrière vers l'avant). Ces dispositifs permettent l'un comme l'autre de s'affranchir de la présence d'un redan défavorable pour les performances aérodynamiques.

Pour le reste, on retrouve dans cette variante les deux vis 11 d'équilibrage fermant des logements, schématisés en 23, de masses d'équilibrage et fixant simultanément des pattes 14'd et 14'c de l'enveloppe 14' contre la tranche d'extrémité du saumon de pale, comme décrit ci-dessus en référence à la figure 2. Dans la variante des figures 4 et 5, l'enveloppe 14' présente ainsi une épaisseur supérieure à celle de la coiffe 13', au moins dans la partie de l'enveloppe 14' qui est voisine du bord d'attaque. Mais cette surépaisseur peut être présentée sur toute la corde du saumon de pale par les parties d'extrados et d'intrados 14'a et 14'b de l'enveloppe 14'.

Une pale selon la variante des figures 4 et 5, avec un blindage dont la coiffe 13' et l'enveloppe 14' ont des ailes d'intrados de plus grandes dimensions que les ailes d'extrados, est particulièrement appropriée à un rotor arrière classique d'hélicoptère, dont le sens de rotation et la position, par rapport au carénage rigide arrière ou pylône arrière de support du rotor sont tels que l'intrados des pales est tourné vers l'extérieur par rapport au pylône, également revêtu d'un bord d'attaque métallique et électriquement conducteur, mis à la masse pour le passage du courant de foudre.

La variante de la figure 7 se distingue essentiellement des exemples précédents par le fait que la coiffe 13" et l'enveloppe 14" ont chacun des ailes d'extrados et d'intrados de mêmes dimensions selon la corde et l'envergure, et donc sensiblement symétriques l'une de l'autre, et par la présence d'un point privilégié d'entrée ou de sortie de la foudre sur l'enveloppe 14". En effet, les ailes d'extrados et d'intrados de cette enveloppe 14" sont chacune prolongées et se rejoignent préférentiellement en saillie au-delà du bord de fuite 8 de la pale, de sorte à réaliser une extrémité de fuite 24 de l'enveloppe 14". Cette extrémité de fuite 24 déborde en saillie au-delà du bord de fuite 8 de la pale, pour constituer ledit point privilégié d'entrée ou de sortie de la foudre. Bien que non représentés, cette variante comporte également des vis et rivets de fixation de l'enveloppe 14" sur la partie sous-jacente de la structure composite de la pale, et, comme dans la variante de la figure 4, le bord de l'aile d'extrados 14"a de l'enveloppe 14", vers l'intérieur de la pale, se raccorde au bord arrière de l'aile d'extrados 13"a de la coiffe 13" par une partie concave arrondie avec un rayon de raccordement. La coiffe 13", toujours d'une seule pièce en tôle métallique avec l'enveloppe 14", s'étend, selon l'envergure de la pale, avec un prolongement continu 13"c, sensiblement comme dans l'exemple de la figure 3, qui recouvre le bord d'attaque du pied de pale 2 jusqu'à proximité immédiate des douilles 9 d'attache.

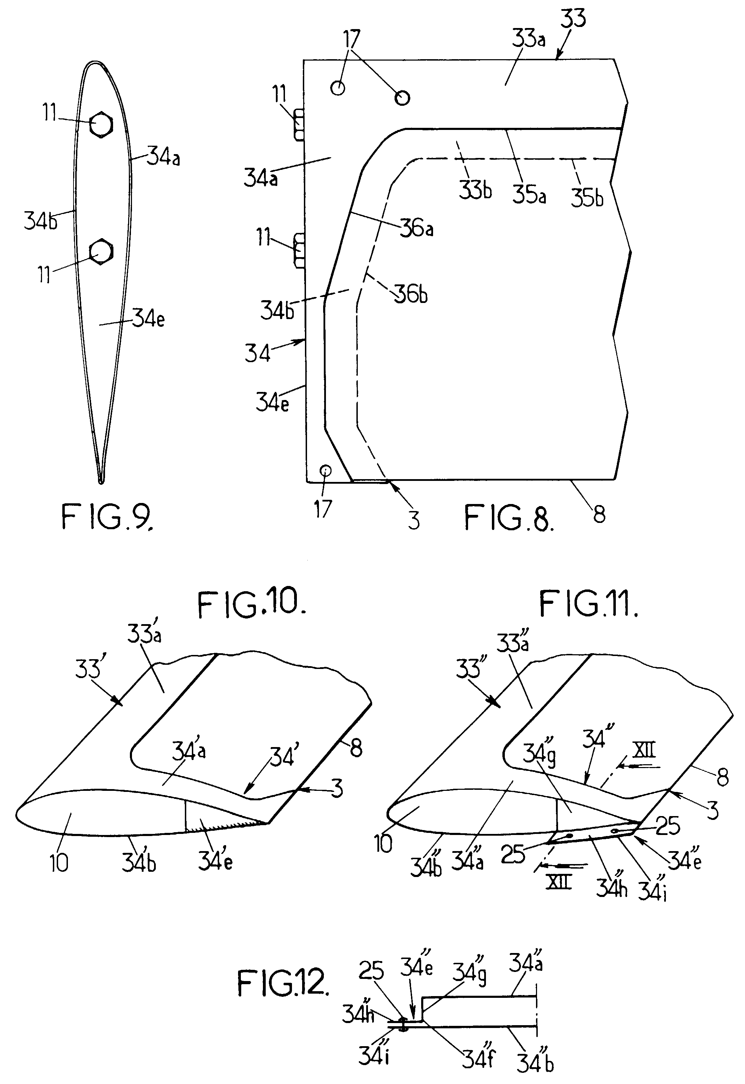

Dans la variante des figures 8 et 9, les ailes d'extrados 34a et d'intrados 34b de l'enveloppe 34 sont reliées l'une à l'autre en continu, du bord d'attaque au bord de fuite, par une nervure d'extrémité 34e de l'enveloppe 34 (voir figure 9). Cette nervure 34e est dans le même métal électriquement conducteur que les ailes 34a et 34b, et elle s'étend contre toute la section de la tranche d'extrémité du saumon de pale 3, dont la partie d'extrémité est ainsi totalement recouverte par l'enveloppe 34. La nervure 34e est fixée contre la tranche d'extrémité du saumon qu'elle recouvre par deux vis 11 qui, comme sur les figures 2 et 4, peuvent être des vis d'équilibrage et/ou de fermeture de logements de masses d'équilibrage ou de réglage dynamique représentés en 23 sur la figure 4. On retrouve que les bords arrière et rectilignes 35a et 35b des ailes d'extrados 33a (la moins large selon la corde) et d'intrados 33b (la plus large selon la corde) de la coiffe 33 se raccordent respectivement aux bords internes 36a et 36b des ailes d'extrados 34a (la moins large selon l'envergure) et d'intrados 34b (la plus large selon l'envergure) de l'enveloppe 34 par des parties concaves avec rayon de raccordement. On retrouve également que les contours des bords internes 36a et 36b des ailes 34a et 34b de l'enveloppe 34 sont parallèles et décalés l'un de l'autre selon l'envergure de la pale, mais, dans cet exemple, ces bords internes 36a et 36b ne sont pas rectilignes de la zone voisine du bord d'attaque au bord de fuite. Ces bords 36a et 36b sont constitués d'une succession de trois segments sensiblement rectilignes dont le premier, vers les bords arrière 35a et 35b de la coiffe 33, est incliné de façon à correspondre à une diminution rapide de la largeur de l'aile 34a ou 34b correspondante en se déplaçant selon la corde vers le bord de fuite. Le second segment des bords 36a et 36b est sensiblement parallèle à la nervure d'extrémité 34e et délimite ainsi une portion des ailes 34a et 34b de largeur constante (selon l'envergure). Enfin, le troisième segment, dans la zone des ailes 34a et 34b qui est ajdacente directement au bord de fuite 8, est incliné dans le sens qui augmente la largeur des ailes 34a et 34b jusqu'au bord de fuite 8. Cette augmentation de largeur permet, dans les zones des ailes 34a et 34b qui sont voisines du bord de fuite 8, de disposer de suffisamment de matière pour la fixation de ces parties à la structure composite sous-jacente de la pale par au moins un rivet 17. Malgré cette augmentation de largeur à proximité du bord de fuite 8, les ailes 34a et 34b de l'enveloppe 34 restent d'une plus grande largeur dans leur zone adjacente au bord d'attaque que dans leur zone adjacente au bord de fuite, et, à proximité du bord d'attaque, ces ailes 34a et 34b sont d'une largeur supérieure à la largeur (selon la corde) respectivement des ailes d'extrados 33a et d'intrados 33b de la coiffe 33. Ainsi, dans les zones voisines du bord d'attaque, les ailes 34a et 34b peuvent chacune être fixée à la structure composite sous-jacente de la pale par deux rivets 17. Les vis 11 et rivets 17 assurent un bon accostage de l'enveloppe 34 sur le saumon de pale 3, en particulier sur la tranche d'extrémité et les zones voisines du bord d'attaque et du bord de fuite de ce saumon 3. De plus, ces vis 11 et rivets 17 assurent, comme dans les exemples précédents, les continuités électriques avec les diverses parties correspondantes de l'enveloppe 34, en complétant les effets du collage fixant également l'enveloppe 34 sur le saumon de pale 3.

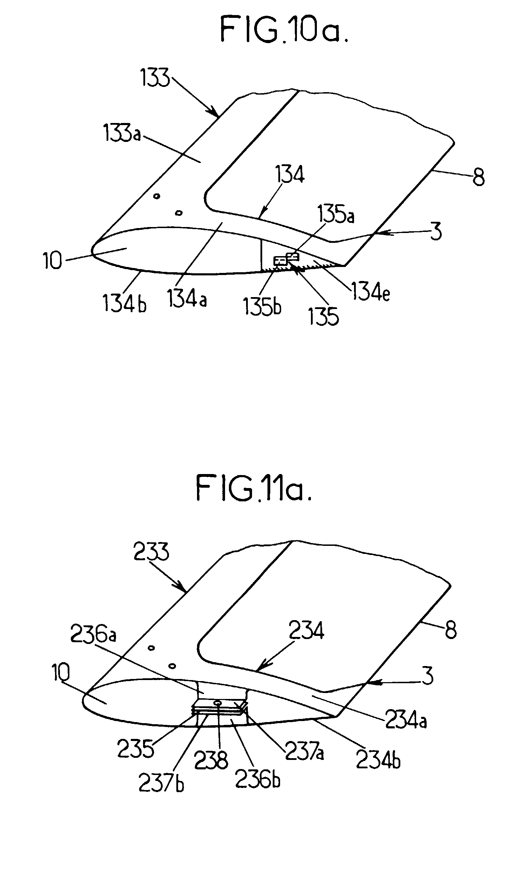

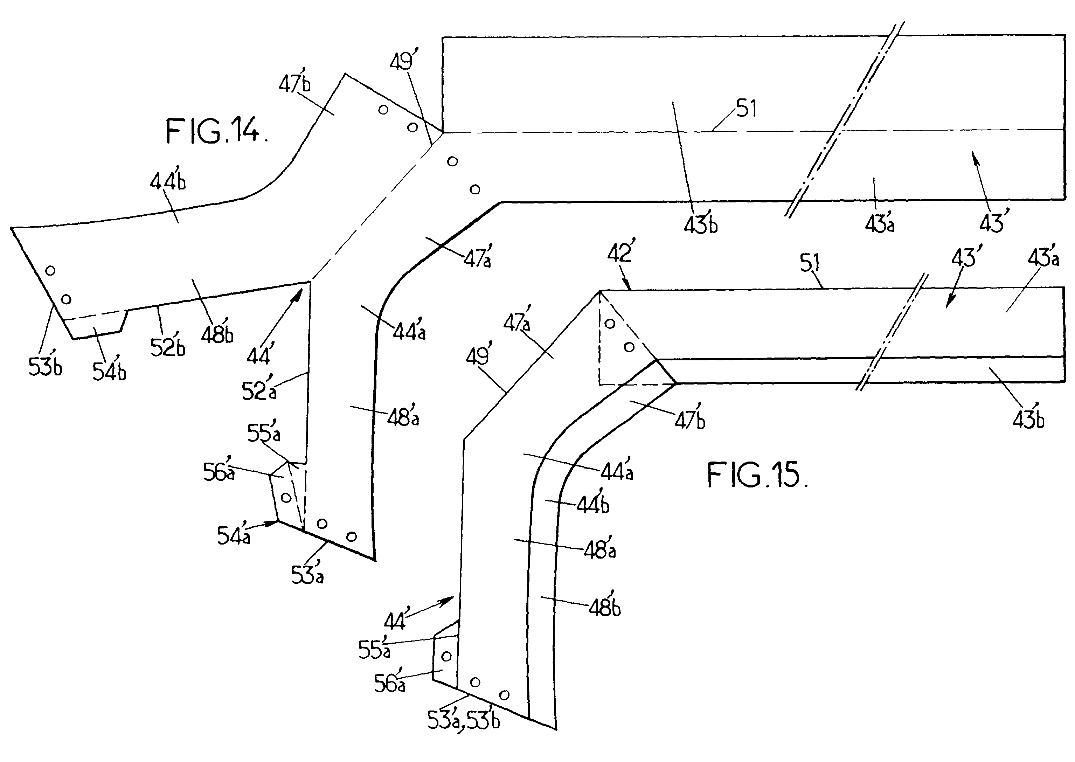

Pour ne pas avoir à réaliser la coiffe 33 et l'enveloppe 34 d'une seule pièce avec des cotes très précises, nécessaires à un bon accostage et un bon collage de cette pièce sur la structure composite de la pale, la nervure complète 34e de la variante des figures 8 et 9 peut être remplacée par une nervure partielle adjacente au bord de fuite, comme dans les variantes des figures 10 et 11.

Sur la figure 10, la nervure partielle d'extrémité 34'e s'étend entre les ailes d'extrados 34'a et d'intrados 34'b de l'enveloppe 34' en étant uniquement appliquée contre la partie de la section de la tranche d'extrémité du saumon 3 qui est adjacente au bord de fuite 8 de la pale. Cette nervure partielle 34'e est constituée par un volet prolongeant, dans cet exemple, la partie de l'aile d'extrados 34'a qui est adjacente au bord de fuite 8, et ce volet 34'e est replié par rapport à cette aile 34'a de façon à être appliqué contre la partie arrière de la tranche d'extrémité du saumon 3, le volet 34'e étant de plus soudé, le long de son bord opposé au bord plié, à l'aile d'intrados 34'b, de sorte que la nervure partielle 34'e ainsi réalisée relie les ailes d'extrados 34'a et d'intrados 34'b en étant en continuité électrique avec elles. Pour le reste, les ailes 34'a et 34'b de l'enveloppe 34' ont sensiblement la même forme que celles de l'enveloppe 34 de la figure 8, et chacune prolonge l'aile correspondante d'extrados 33'a ou d'intrados de la coiffe 33', dans les mêmes conditions que sur la figure 8.

Sur la figure 10a, l'enveloppe 134 est analogue à l'enveloppe 34' de la figure 10 en ce qu'elle comporte une nervure partielle d'extrémité 134e conductrice, en continuité électrique avec les ailes d'extrados 134a et d'intrados 134b de l'enveloppe 134 dont la nervure 134e est solidaire et entre lesquelles elle s'étend, l'enveloppe 134 étant rapportée sur le saumon de pale 3 et en continuité électrique avec la coiffe 133 de bord d'attaque comme dans les exemples précédents. La nervure 134e peut être constituée comme celle 34'e de la figure 10, par un volet solidaire de l'aile d'extrados 134a et replié contre la partie de la tranche d'extrémité 10 qui est adjacente au bord de fuite 8, le bord inférieur de ce volet étant soudé au bord de l'aile d'intrados 134b. La différence essentielle avec l'exemple de la figure 10 est que la nervure 134e est percée d'une fente qui, lorsque l'on vient accoster l'enveloppe 134 sur le saumon 3, se trouve être traversée par une ailette métallique conductrice 135, solidaire de la structure composite de la pale et en saillie selon l'envergure à l'extérieur de la partie arrière de la tranche d'extrémité 10. Après passage de l'ailette 135 dans la fente de la nervure 134e et engagement de l'enveloppe 134 sur le saumon 3 jusqu'à application de la nervure 134e contre la partie arrière de la tranche d'extrémité 10, la portion de l'ailette 135 en saillie à l'extérieur de la nervure 134e est avantageusement divisée longitudinalement en au moins deux moitiés dont l'une 135a est repliée contre la face externe de la nervure 134e vers l'aile d'extrados 134a et l'autre 135b vers l'aile d'intrados 134b. En variante, la nervure 134e peut être complète. On assure ainsi un ancrage mécanique de l'enveloppe 134 sur la structure composite de la pale par coopération de l'ailette 135 avec la nervure 134e.

La coupe schématique de la figure 12 montre clairement la structure pliée et rivetée de la nervure partielle d'extrémité 34"e de la variante de la figure 11. Cette nervure partielle 34"e comprend un premier volet 34"f, qui est double et prolonge la partie, voisine du bord de fuite 8, de l'aile d'extrados 34"a de l'enveloppe 34". Ce premier volet 34"f comprend une première partie 34"g, adjacente à l'aile 34"a et qui est repliée contre la partie arrière de la tranche d'extrémité 10 du saumon de pale 3, et une seconde partie 34"h, qui est pliée par rapport à la première partie 34"g à laquelle elle est adjacente, et la partie 34"h est contre-coudée et appliquée contre un second volet 34"i qui prolonge, au-delà de la tranche d'extrémité 10, selon l'envergure, la partie voisine du bord de fuite sur l'aile d'intrados 34"b de l'enveloppe 34". La seconde partie 34"h du premier volet 34"f est ensuite rivetée, par exemple par deux rivets 25, contre le second volet 34"i, de sorte que l'on obtient une nervure partielle d'extrémité 34"e de section sensiblement en "z", assurant une liaison rigidifiée entre les ailes d'extrados 34"a et d'intrados 34"b et en continuité électrique avec elles. Pour le reste, on retrouve que les ailes d'extrados 34"a et d'intrados 34"b de l'enveloppe 34" ont sensiblement les mêmes formes et se raccordent de la même manière aux ailes respectivement d'extrados 33"a et d'intrados de la coiffe 33" que dans l'exemple de la figure 8.

Dans la variante de la figure 11a, on retrouve une ailette conductrice 235 solidaire de la structure composite de la pale et en saillie selon l'envergure à l'extérieur de la tranche d'extrémité 10. Mais, à la différence de l'ailette 135 de la figure 10a, l'ailette 235 déborde de la partie centrale de la tranche 10 et s'étend sensiblement dans le plan de corde sans être repliée. Chacune des ailes d'extrados 234a et d'intrados 234b de l'enveloppe 234 rapportée sur le saumon 3 et en continuité électrique avec la coiffe 233 de bord d'attaque, comme dans les exemples précédents, est prolongée du côté de la tranche 10 par l'une respectivement de deux pattes en regard 236a et 236b, dont l'une 236a est une patte d'extrados repliée vers l'aile d'intrados 234b et contre la tranche 10 et dont la partie d'extrémité libre 237a est contre-coudée et appliquée contre la face supérieure (sur la figure 11a) de l'ailette 235, tandis que la patte d'intrados 236b est repliée vers l'aile d'extrados 234a, contre la tranche 10, et sa partie d'extrémité libre 237b est contre-coudée et appliquée contre la face inférieure de l'ailette 235. L'ensemble de l'ailette 235 et des deux parties contre-coudées 237a et 237b est collé par un adhésif de préférence conducteur et riveté par au moins un rivet 238 rendant la liaison davantage conductrice. Cet ensemble en débordement par rapport à la tranche 10 d'extrémité de la pale, et assurant un ancrage mécanique de l'enveloppe 234 sur le saumon de pale 3, constitue un point d'entrée ou de sortie privilégié de la foudre, qui protège la structure composite de la pale contre les impacts directs sans trop perturber l'écoulement aérodynamique, car l'ailette 235 et les pattes 236a et 236b sont placées plus près du bord de fuite 8 que du bord d'attaque de la pale. Cette ailette, lorsqu'elle reste protubérante (c'est-à-dire hors du diamètre théorique du rotor défini par la position de la tranche d'extrémité du saumon par rapport au centre du rotor) peut servir de marque de repérage optique lors du réglage dynamique, appel "track", du rotor.

Une nervure partielle d'extrémité, du type de celle des figures 10, 10a et 11, est une solution intéressante pour une enveloppe destinée à recouvrir un saumon de pale tronqué sur une partie de la corde, et présentant de ce fait un bord d'attaque incliné vers le bord de fuite et vers l'extrémité du saumon, que ce saumon tronqué soit un saumon parabolique ou ayant un bord d'attaque incliné avec un angle de flèche par rapport au bord d'attaque de la partie courante de la pale, car des vis d'équilibrage ne sont pas toujours présentes.

Une pale avec saumon tronqué en flèche est partiellement et schématiquement représentée sur la figure 13. Sur cette figure, le saumon 3' à l'extrémité externe de la partie courante 1' de la pale présente, vu en plan, une forme de trapèze rectangle dont le côté incliné constitue le bord d'attaque du saumon 3' et présente un angle de flèche qui peut être de 45° ± 15° environ par rapport au bord d'attaque de la partie courante 1'. Comme dans les exemples précédents concernant des pales à saumons droits, une unique pièce 42 métallique de blindage constitue simultanément une coiffe 43 de bord d'attaque et une enveloppe 44 de saumon de pale 3'. Dans cet exemple, la coiffe 43 et l'enveloppe 44 ont chacune des ailes d'extrados et d'intrados symétriques, c'est-à-dire de mêmes dimensions selon la corde et l'envergure de la pale. Toutefois, chacune des deux ailes de l'enveloppe 44, comme l'aile d'extrados 44a, comprend une partie avant inclinée telle que 47a et une partie arrière droite telle que 48a. Les deux parties avant inclinées telles que 47a, chacune inclinée selon l'angle de flèche désiré dans le prolongement de l'aile correspondante d'extrados 43a ou d'intrados de la coiffe 43, sont solidaires l'une de l'autre et adjacentes l'une à l'autre le long du bord d'attaque incliné 49 du capuchn 44, ce bord d'attaque 49 recouvrant directement celui, de même forme, du saumon de pale 3'. Chacune des parties arrière droites telles que 48a, qui prolonge la partie avant inclinée correspondante, telle que 47a, vers le bord de fuite 8' de la pale en étant sensiblement perpendiculaire à ce dernier, ou inclinée d'un petit angle (de l'ordre de 3°) vers l'arrière et vers le pied de pale pour rester dans le diamètre du rotor passant par le raccordement entre les parties 48a ou 48b et 49a ou 49b afin d'éviter l'érosion d'une tranche "droite", est séparée de l'autre partie arrière droite par la tranche d'extrémité profilée, schématiquement indiquée par la flèche 50, du saumon de pale 3'. En variante de définition, les segments droits 47a, 47b, 48a, 48b et 49a, 49b peuvent être remplacés de manière équivalente par une courbe.

Pour la fixation de l'enveloppe 44 contre cette tranche d'extrémité 50 du saumon 3', laquelle présente une section profilée inférieure à celle de la partie courante 1' de la pale, on peut réaliser une nervure partielle à un volet plié et soudé ou à deux volets dont l'un est double, plié, contre-coudé et riveté à l'autre, comme sur les figures 10 et 11, pour relier la partie arrière droite 48a de l'aile d'extrados 44a à la partie arrière droite correspondante de l'aile d'intrados, cette nervure partielle étant fixée sur la tranche d'extrémité 50 par un collage conducteur et par des moyens mécaniques tels qu'une ou deux vis, comme sur les figures 2 et 4, mais n'assurant pas forcément la fonction de fermeture de boîtier d'équilibrage, des rivets pouvant également être utilisés pour fixer sur la structure composite du saumon 3' la zone, voisine du bord de fuite 8', des parties arrière droite telles que 48a des deux ailes de l'enveloppe 44. Les parties avant inclinées telles que 47a de cette enveloppe 44 sont également fixées à la structure composite sous-jacente du saumon de pale 3' par un collage conducteur et des rivets dans leur zone voisine des ailes correspondantes de la coiffe 43. De plus, chaque bord interne, tel que 46a, d'une aile telle que 44a de l'enveloppe 44 présente deux parties concaves à rayon de raccordement, dont l'une raccorde la partie arrière droite correspondante, telle que 48a, à la partie avant inclinée respective 47a, et l'autre raccorde cette dernière partie 47a au bord arrière tel que 45a de l'aile correspondante 43a de la coiffe 43.

L'avantage de cette réalisation est que l'unique pièce de blindage 42 présente une surface développable, et peut donc être réalisée à partir d'une pièce continue de tôle découpée par deux pliages successifs, dont le premier, le long du bord d'attaque de la partie courante 1', et suivi d'un étirage, permet de conformer la coiffe 43, et est suivi d'un découpage des contours de la coiffe 43, par un procédé de découpe au laser ou équivalent, aux dimensions requises, et dont le second, le long du bord d'attaque incliné 49 de l'enveloppe 44, permet de conformer l'enveloppe dans ses parties avant inclinées telles que 47a, et de positionner ses parties arrière telles que 48a de part et d'autre de la section d'extrémité du saumon de pale 3', et de sorte qu'il ne reste plus qu'à relier les deux parties arrière droites telle que 48a par une nervure partielle.

Cet avantage de la pièce de blindage à surface développable pour une pale à saumon tronqué en flèche est conservé, même si la coiffe 43 et l'enveloppe 44 ont des ailes d'extrados et d'intrados dissymétriques, comme cela est représenté en variante sur les figures 14 et 15.

La figure 14 représente les contours de la pièce de tôle développée à plat, avant tout pliage de conformation. La figure 15 représente la pièce de blindage 42' mise en forme par deux pliages successifs de la pièce de tôle de la figure 14. Sur cette figure 14, une partie en rectangle allongé correspond à la coiffe 43' développée à plat. Les parties rectangulaires allongées supérieure et inférieure de cette coiffe développée 43' sont adjacentes le long d'un axe rectiligne 51, qui est l'axe du premier pliage, correspondant au bord d'attaque rectiligne 51 de la coiffe 43' en forme. Ces parties rectangulaires allongées supérieure et inférieure correspondent respectivement aux ailes d'intrados 43'b (la plus large selon la corde) et d'extrados 43'a de la coiffe 43'. A son extrémité de gauche sur la figure 14, la partie rectangulaire allongée inférieure, correspondant à l'aile d'extrados 43'a, est prolongée par une partie de tôle sensiblement en forme de "Y" incliné. Les deux branches du Y, chacune en forme sensiblement de parallélogramme, correspondent aux parties arrière droites 48'a et 48'b respectivement des ailes d'extrados 44'a et d'intrados 44'b de l'enveloppe 44', développées à plat. Le pied du Y est constitué par les deux parties avant 47'a et 47'b des deux ailes 44'a et 44'b de l'enveloppe 44', ces deux parties avant 47'a et 47'b étant solidaires l'une de l'autre et adjacentes l'une à l'autre le long d'un second axe de pliage 49', qui correspond au bord d'attaque incliné de l'enveloppe 44' conformé. Ce second axe de pliage 49' passe par l'extrémité du premier axe de pliage 51 (bord d'attaque de la coiffe 43') du côté opposé au pied de pale, ainsi que par le point de jonction des deux bords (52'a et 52'b) externes (selon l'envergure de la pale, mais à l'intérieur des branches du Y avant pliage) des parties arrière 48'a et 48'b de l'enveloppe 44'. Le bord "externe" 52'a de la partie arrière 48'a présente, en saillie vers l'intérieur du Y, à proximité de son bord de fuite 53'a, un volet double 54'a avec une partie 55'a triangulaire et adjacente à la partie arrière 48'a et avec une partie 56'a trapézoïdale et adjacente à la partie triangulaire 55'a, et percée d'un orifice pour au moins un rivet de fixation. En correspondance, le bord "externe" 52'b de l'autre partie arrière 48'b présente, en saillie vers l'intérieur du Y, à proximité de son bord de fuite 53'b, un volet trapézoïdal d'une seule pièce 54'b. Chacune des parties arrière 48'a et 48'b présente également, à proximité de son bord de fuite 53'a ou 53'b, au moins deux trous de passage de rivets. De même, à leur extrémité voisine de la coiffe 43', les parties avant inclinées 47'a et 47'b présentent chacune au moins deux trous de passage de rivets. Par le premier pliage autour de l'axe 51, on rabat l'aile d'intrados 43'b de la coiffe 43' sous son aile d'extrados 43'a pour conformer la coiffe 43', comme visible sur la figure 15. Ensuite, par un second pliage autour de l'axe 49', on rabat l'aile d'intrados 44'b de l'enveloppe 44' sous son aile d'extrados 44'a ce qui conforme la partie avant inclinée 47'b par dessous une partie de l'aile d'intrados 43'b de la coiffe 43'. Simultanément, les parties arrière 48'a et 48'b sont disposées sensiblement à l'aplomb l'une au-dessus de l'autre. La partie 55'a du volet 54'a peut être rabattue perpendiculairement au plan de la figure 14, et l'autre partie 56'a de ce même double volet 54'a peut ensuite être repliée pour être appliquée contre le volet 54'b de l'autre partie arrière 48'b. De la sorte, par la pose d'au moins un rivet solidarisant ces deux volets, on réalise une nervure partielle reliant les deux parties arrière 48'a et 48'b, lesquelles peuvent être fixées par deux rivets au niveau de leur bord de fuite 53'a et 53'b, après mise en place sur la structure composite de base d'une pale à saumon tronqué en flèche, comme sur la figure 13. De même, au moins deux rivets permettent de fixer la partie avant inclinée 47'a dans sa zone voisine de la coiffe 43' sur la structure composite sous-jacente de la pale, et au moins deux autres rivets permettent de fixer la partie avant inclinée 47'b sur la portion qu'elle recouvre de l'aile d'intrados 43'b de la coiffe 43' et dans la structure composite sous-jacente de la pale.

On peut ainsi, de manière simple, réaliser d'une seule pièce un blindage de protection renforcée contre la foudre et ayant une coiffe de bord d'attaque et une enveloppe de saumon de pale présentant chacun des ailes d'extrados et d'intrados dissymétriques.

Une telle enveloppe peut être réalisée pour toutes les extrémités de pale, y compris celles ayant des formes non développables (parabolique par exemple) par des opérations d'emboutissage, d'électroformage et/ou d'étirage plastique, le bord d'attaque de l'enveloppe étant fabriqué par des opérations de pliage (d'une tôle ou d'un laminé de titane par exemple), d'étirage-conformage ou poinçonnage, et de découpage au contour final.

## Revendications

1. Pale à blindage de protection renforcée contre la foudre, pour rotor de giravion, en particulier pour rotor arrière d'hélicoptère, ladite pale comprenant une structure composite (20) essentiellement en matériau composite à matrice synthétique et fibres de renfort minérales et/ou organiques, réalisant une partie courante profilée (1) délimitée entre une surface d'extrados (5) et une surface d'intrados (6) qui s'étendent, selon la corde de la pale, entre un bord d'attaque (7) et un bord de fuite (8) et, selon l'envergure de la pale, entre un saumon de pale (3) à une extrémité de ladite partie courante (1) et un pied de pale (2) qui prolonge l'extrémité opposée de ladite partie courante (1), et qui comporte des moyens (9) d'attache de la pale, pour sa liaison à un moyeu de rotor, ledit blindage de protection contre la foudre comprenant :
- une coiffe (13) de protection du bord d'attaque (7), ladite coiffe (13) étant métallique, électriquement conductrice, et comprenant une aile d'extrados (13a) et une aile d'intrados (13b), adjacentes le long du bord d'attaque et fixées sur des parties sous-jacentes des surfaces d'extrados (5) et d'intrados (6),
- une enveloppe (14) de protection dudit saumon de pale (3), ladite enveloppe (14) coiffant au moins l'extrémité dudit saumon de pale (3) et étant métallique, électriquement conductrice, et comprenant une aile d'extrados (14a) et une aile d'intrados (14b) qui s'étendent sur toute la corde d'extrémité dudit saumon de pale (3) et sont appliquées sur des parties sous-jacentes desdites surfaces respectivement d'extrados (5) et d'intrados (6) au niveau du saumon (3), en étant relié en continuité électrique avec ladite coiffe (13), et
- des moyens (18) électriquement conducteurs sur ledit pied de pale (2), et destinés à assurer la continuité électrique entre ladite coiffe (13) et des moyens électriquement conducteurs dudit moyeu, pour la mise à la masse dudit blindage,
caractérisée en ce que ladite coiffe (13) de bord d'attaque (7) et ladite enveloppe (14) de saumon de pale (3) sont réalisées en une seule pièce (12), qui est fixée par ladite enveloppe (14) contre au moins la tranche (10) d'extrémité de ladite structure composite (20) au niveau dudit saumon de pale (3) à l'aide de moyens de fixation au moins en partie électriquement conducteurs.

2. Pale selon la revendication 1, caractérisée en ce que les moyens de fixation comprennent au moins un adhésif, éventuellement électriquement conducteur, assurant le collage de l'enveloppe (14) contre au moins une partie de la tranche d'extrémité (10) du saumon de pale (3) et/ou une partie de l'une au moins desdites surfaces d'extrados (5) et d'intrados (6) de la structure composite (20), ladite coiffe (13) adhérant également par collage à ladite structure composite (20).

3. Pale selon l'une des revendications 1 et 2, caractérisée en ce que lesdits moyens de fixation comprennent des moyens mécaniques (11, 17) présentant des formes protubérantes, telles que vis et rivets, constituant des points prédéterminés d'impact ou de sortie de la foudre, et mis en continuité électrique avec ladite enveloppe (14).

4. Pale selon la revendication 3, caractérisée en ce que lesdits moyens mécaniques de fixation comprennent au moins une vis (11) d'équilibrage et/ou de fermeture d'un logement (23) d'au moins une masse d'équilibrage et/ou de réglage dynamique, et qui se visse dans une zone de ladite tranche (10) d'extrémité du saumon de pale (3) qui est plus proche dudit bord d'attaque (7) que du bord de fuite (8).

5. Pale selon la revendication 4, caractérisée en ce que ladite vis (11) fixe contre ladite tranche (10) d'extrémité du saumon de pale (3) au moins une patte de l'enveloppe (14c, 14d), qui prolonge l'une au moins desdites ailes d'extrados (14a) et d'intrados (14b) de ladite enveloppe (14) et est repliée par rapport auxdites ailes d'extrados (14a) et d'intrados (14b) de l'enveloppe.

6. Pale selon la revendication 4, caractérisée en ce que ladite vis (11) fixe contre ladite tranche d'extrémité du saumon de pale (3) une nervure (34e) électriquement conductrice d'extrémité de l'enveloppe (34), reliant lesdites ailes d'extrados (34a) et d'intrados (34b) de l'enveloppe (34) et s'étendant sur toute la section de ladite tranche d'extrémité.

7. Pale selon l'une quelconque des revendications 2 à 5, caractérisée en ce que ladite enveloppe (34', 34") comprend une nervure partielle d'extrémité (34'e, 34"e), électriquement conductrice, reliant les ailes d'extrados (34'a, 34"a) et d'intrados (34'b, 34"b) de l'enveloppe (34', 34") avec lesquelles ladite nervure partielle (34'e, 34"e) est en continuité électrique, et s'étendant sur une partie de la section de ladite tranche d'extrémité (10) qui est adjacente audit bord de fuite (8).

8. Pale selon la revendication 7, caractérisée en ce que ladite nervure partielle d'extrémité comprend au moins un volet d'enveloppe (34'e), qui prolonge l'une desdites ailes d'extrados et d'intrados (34'a, 34'b) de l'enveloppe (34'), et est replié contre ladite partie de tranche d'extrémité (10) adjacente au bord de fuite (8), ledit volet (34'e) étant fixé, de préférence par soudure, à l'autre desdites ailes d'extrados et d'intrados (34'a, 34'b) de l'enveloppe (34').

9. Pale selon la revendication 7, caractérisée en ce que ladite nervure partielle d'extrémité (34"e) comprend au moins un double volet (34"f) de l'enveloppe, qui prolonge l'une desdites ailes d'extrados et d'intrados (34"a, 34"b) de l'enveloppe (34"), et dont une première partie (34"g), adjacente à ladite aile (34"a, 34"b) de l'enveloppe (34"), est repliée contre ladite partie de tranche d'extrémité (10) adjacente au bord de fuite (8), tandis que la seconde partie (34"h) du double volet (34"f), adjacente à la première partie (34"g) de ce dernier, est contre-coudée par rapport à la première partie (34"g) dudit double volet (34"f) et fixée, de préférence par au moins un rivet (25), contre un second volet (34"i) prolongeant l'autre desdites ailes d'extrados et d'intrados (34"a, 34"b) de l'enveloppe (34") et en saillie selon l'envergure au-delà de ladite tranche d'extrémité (10) du saumon de pale (3).

10. Pale selon l'une quelconque des revendications 1 à 5, caractérisée en ce que l'enveloppe (134) comporte une nervure (134e) au moins partielle d'extrémité, électriquement conductrice, en continuité électrique avec les ailes d'extrados (134a) et d'intrados (134b) de l'enveloppe (134), et percée d'au moins une fente traversée par au moins une ailette (135) électriquement conductrice solidaire de la structure composite de la pale et en saillie, selon l'envergure, vers l'extérieur du saumon de pale (3) la portion de l'ailette (135) en saillie à l'extérieur de la nervure (134e) étant repliée, au moins en partie (135a, 135b), contre ladite nervure (134e) afin de maintenir la nervure (134e) appliquée contre la tranche d'extrémité (10) de la pale.

11. Pale selon l'une quelconque des revendications 1 à 5, caractérisée en ce que la structure composite de la pale est prolongée, selon l'envergure et en saillie à l'extérieur du saumon de pale (3), par au moins une ailette (235) électriquement conductrice solidaire de ladite structure composite et contre deux faces opposées de laquelle sont fixées, par collage de préférence conducteur et/ou par rivetage (238) ou vissage, des parties contre-coudées (237a, 237b) au moins deux pattes (236a, 236b) repliées contre la tranche d'extrémité (10) du saumon de pale (3) et chacune solidaire de l'une respectivement des ailes d'extrados (234a) et d'intrados (234b) de l'enveloppe (234).

12. Pale selon l'une quelconque des revendications 3 à 11, caractérisée en ce que lesdits moyens mécaniques de fixation comprennent au moins un rivet (17) fixant l'une au moins desdites ailes d'extrados (14a) et d'intrados (14b) de ladite enveloppe (14) contre l'une au moins desdites surfaces d'extrados (5) et d'intrados (6) au niveau du saumon de pale (3), dans une zone voisine du bord de fuite (8) et/ou dans une zone voisine du bord d'attaque (7).

13. Pale selon l'une quelconque des revendications 1 à 12, caractérisée en ce que l'une au moins desdites ailes d'extrados et d'intrados (14a, 14b) de l'enveloppe (14) a une dimension et/ou section de matière, selon l'envergure, qui est plus grande dans la zone voisine du bord d'attaque (7) que dans la zone voisine du bord de fuite (8).

14. Pale selon la revendication 13, caractérisée en ce que l'une au moins desdites ailes d'extrados et d'intrados (34a, 34b) de l'enveloppe (34) présente une dimension et/ou section de matière, selon l'envergure, qui se réduit sensiblement progressivement d'une zone voisine du bord d'attaque à une zone voisine du bord de fuite (8), puis qui augmente dans une zone directement adjacente au bord de fuite (8) et jusqu'à ce dernier.

15. Pale selon l'une quelconque des revendications 1 à 14, caractérisée en ce que l'une au moins desdites ailes d'extrados et d'intrados (14a, 14b) de l'enveloppe (14) a, dans sa zone voisine du bord d'attaque (7), une dimension et/ou section de matière selon l'envergure qui n'est pas sensiblement inférieure à la dimension et/ou section de matière, selon la corde, de la zone adjacente de l'aile correspondante d'extrados (13a) ou d'intrados (13b) de la coiffe (13).

16. Pale selon l'une quelconque des revendications 1 à 15, caractérisée en ce que l'une au moins des ailes d'extrados et d'intrados (14a, 14b) de l'enveloppe (14) présente, dans sa zone voisine du bord d'attaque (7), un bord (16a, 16b) s'étendant sur ladite surface d'extrados ou d'intrados (5, 6) correspondante et qui se raccorde par une partie concave avec un rayon de raccordement au bord correspondant (15a, 15b) de l'aile d'extrados ou d'intrados correspondante (13a, 13b) de la coiffe (13).

17. Pale selon l'une quelconque des revendications 1 à 16, caractérisée en ce que l'une au moins des ailes d'extrados et d'intrados (14'a, 14'b) de l'enveloppe (14') a, au moins dans sa zone voisine du bord d'attaque, une section transversale développée qui est au moins égale ou supérieure à celle de l'aile correspondante d'extrados ou d'intrados (13'a, 13'b) de la coiffe (13') dans sa zone adjacente à l'enveloppe (14').

18. Pale selon l'une quelconque des revendications 1 à 17, caractérisée en ce que la coiffe (13") et l'enveloppe (14") ont des ailes d'extrados (13"a, 14"a) ayant sensiblement les mêmes dimensions que leurs ailes d'intrados, selon la corde et l'envergure de la pale.

19. Pale selon l'une quelconque des revendications 1 à 17, caractérisée en ce que la coiffe (13') et l'enveloppe (14') ont des ailes d'extrados (13'a, 14'a) ayant des dimensions différentes de celles de leurs ailes d'intrados (13'b, 14'b), selon la corde et/ou l'envergure de la pale.

20. Pale selon l'une quelconque des revendications 1 à 17, caractérisée en ce que l'enveloppe (14) a des ailes d'extrados et d'intrados (14a, 14b) dont les dimensions sont différentes au moins selon l'envergure de la pale.

21. Pale selon la revendication 20, caractérisée en ce que les bords (16a, 16b) des ailes d'extrados et d'intrados (14a, 14b) de l'enveloppe (14) qui s'étendent sur lesdites surfaces d'extrados et d'intrados (5, 6) évoluent parallèlement l'un à l'autre mais sont décalés l'un par rapport à l'autre selon l'envergure de la pale, en suivant une ligne polygonale ou avec une courbure continue.

22. Pale selon l'une quelconque des revendications 1 à 21, dont le saumon (3') est tronqué sur au moins une partie de la corde et présente un bord d'attaque incliné vers le bord de fuite et vers l'extrémité du saumon (3'), caractérisée en ce que l'enveloppe (44) présente un bord d'attaque (49) incliné, de même forme que celui du saumon (3') et le long duquel ses ailes d'extrados (44a) et d'intrados (14a, 14b) sont adjacentes et solidaires l'une de l'autre.

23. Pale selon l'une quelconque des revendications 1 à 22, caractérisée en ce que lesdits moyens électriquement conducteurs dudit pied de pale (2), pour assurer la continuité électrique entre la coiffe (13) et le moyeu, comprennent au moins un ruban (18) et/ou une tresse métallique électriquement conducteur s'étendant depuis une extrémité de ladite coiffe (13) qui est la plus proche dudit pied de pale (2), jusqu'à un point fixe (19) dudit pied de pale (2), et fixé(e) à ce dernier par collage et/ou rivetage ou vissage.

24. Pale selon l'une quelconque des revendications 1 à 22, caractérisée en ce que lesdits moyens électriquement conducteurs dudit pied de pale (2), pour assurer la continuité électrique entre la coiffe (13) et le moyeu, comprennent un prolongement continu (13c) de ladite coiffe (13) qui protège une partie dudit pied de pale (2) venant dans le prolongement du bord d'attaque jusqu'à proximité desdits moyens d'attache (9) de la pale, ledit prolongement (13c) de la coiffe (13) étant fixé en au moins un point contre ledit pied de pale (2) par des moyens mécaniques de fixation (19), du type vis ou rivets, et/ou par un adhésif, de préférence conducteur.

25. Pale selon l'une quelconque des revendications 1 à 22, dont lesdits moyens d'attache (9) de la pale comprennent, sur le pied de pale (2), au moins une douille d'attache (9) métallique et électriquement conductrice, caractérisée en ce que lesdits moyens électriquement conducteurs dudit pied de pale (2), pour assurer la continuité électrique entre la coiffe (13) et le moyeu, comprennent un prolongement continu (13c) de ladite coiffe (13) qui s'étend jusqu'à être en liaison directe (13d) avec ladite douille d'attache (9).

26. Pale selon l'une quelconque des revendications 1 à 25, caractérisée en ce que ladite enveloppe (14") présente une extrémité de fuite (24) qui déborde en saillie au-delà dudit bord de fuite (8) de la pale.

27. Pale selon l'une quelconque des revendications 1 à 26, dont les fibres de renfort de ladite structure composite (20) comprennent des fibres de carbone, caractérisée en ce qu'elle comprend, au moins entre ladite partie courante (1) et ladite coiffe (13') de bord d'attaque, une coiffe (21) sous-jacente diélectrique, de préférence composite à matrice synthétique et fibres de renfort en verre, qui isole la coiffe (13') de bord d'attaque de ladite structure composite (20).

28. Pale selon l'une quelconque des revendications 1 à 27, caractérisée en ce que l'enveloppe (14) et la coiffe (13) sont en tôle de titane, d'acier inoxydable formé ou de nickel électroformé.

## Patentansprüche

1. Blatt mit Abschirmung zum verstärkten Blitzschutz für einen Drehflügler-Rotor, insbesondere für einen Hubschrauber-Heckrotor, wobei das Blatt einen Verbundaufbau (20) im wesentlichen aus Verbundwerkstoff mit einer synthetischen Matrix und mineralischen und/oder organischen Verstärkungsfasern enthält, der einen profilierten Strömungsteil (1) realisiert, der zwischen einer Saugseitenoberfläche (5) und einer Druckseitenoberfläche (6) eingegrenzt ist, die sich entlang der Tiefe des Blattes zwischen einer Vorderkante (7) und einer Hinterkante (8) und entlang der Spannweite des Blattes zwischen einem Blattendstück (3) an einem Ende des Strömungsteils (1) und einem Blattfuß (2) erstrecken, der das entgegengesetzte Ende des Strömungsteils (1) verlängert und der Befestigungsmittel (9) des Blattes für dessen Verbindung mit einer Rotornabe enthält, wobei die Abschirmung zum Blitzschutz umfaßt:
- eine Haube (13) zum Schutz der Vorderkante (7), wobei die genannte Haube (13) metallisch und elektrisch leitfähig ist und einen Saugseitenflügel (13a) und einen Druckseitenflügel (13b) enthält, die entlang der Vorderkante (7) aneinandergrenzen und auf darunter liegenden Teilen der Saugseiten- (5) und der Druckseitenoberfläche (6) befestigt sind,
- eine Hülle (14) zum Schutz des Blattendstücks (3), wobei die genannte Hülle (14) wenigstens das Ende des genannten Blattendstücks (3) bedeckt und metallisch sowie elektrisch leitfähig ist und einen Saugseitenflügel (14a) und einen Druckseitenflügel (14b) enthält, die sich über die ganze Endtiefe des Blattendstücks (3) erstrecken und auf darunter liegenden Teilen der Saugseiten- (5) bzw. der Druckseitenoberfläche (6) in Höhe des Endstücks (3) befestigt sind, wobei sie mit der genannten Haube (13) elektrisch leitend verbunden ist, und
- Mittel (18) am Blattfuß (2), die elektrisch leitfähig sind und dazu bestimmt sind, die elektrische Leitkontinuität zwischen der genannten Haube (13) und elektrisch leitfähigen Mitteln der Nabe sicherzustellen, zum Legen der genannten Abschirmung an Masse,
**dadurch gekennzeichnet**, daß die genannte Haube (13) der Vorderkante (7) und die genannte Hülle (14) des Blattendstücks (3) in einem einzigen Stück (12) ausgeführt sind, das durch die genannte Hülle (14) wenigstens an der Endschnittfläche (10) des genannten Verbundaufbaus (20) in Höhe des genannten Blattendstücks (3) mit Hilfe von zumindest teilweise elektrisch leitfähigen Befestigungsmitteln befestigt ist.

2. Blatt nach Anspruch 1, **dadurch gekennzeichnet**, daß die Befestigungsmittel wenigstens einen möglicherweise elektrisch leitfähigen Kleber enthalten, der die Haftung der Hülle (14) an wenigstens einem Teil der Endschnittfläche (10) des Blattendstücks (3) und/oder einem Teil von wenigstens einer der genannten Saugseiten- (5) und Druckseitenoberflächen (6) des Verbundaufbaus (20) sicherstellt, wobei die genannte Haube (13) auch durch Verklebung am genannten Verbundaufbau (20) haftet.

3. Blatt nach einem der Ansprüche 1 und 2, **dadurch gekennzeichnet**, daß die Befestigungsmittel mechanische Mittel (11, 17) umfassen, die hervorragende Formen aufweisen, wie z.B. Schrauben und Nieten, die vorher festgelegte Einschlag- oder Austrittspunkte des Blitzes bilden, und die mit der genannten Hülle (14) elektrisch leitend verbunden sind.

4. Blatt nach Anspruch 3, **dadurch gekennzeichnet**, daß die genannten mechanischen Befestigungsmittel wenigstens eine Ausgleichs- und/oder Verschlußschraube (11) einer Aufnahme (23) wenigstens einer Masse zum Ausgleich und/oder zur dynamischen Einstellung umfassen und diese Schraube in einer Zone der genannten Endschnittfläche (10) des Blattendstücks (3) verschraubt wird, die näher an der Vorderkante (7) als an der Hinterkante (8) ist.

5. Blatt nach Anspruch 4, **dadurch gekennzeichnet**, daß die genannte Schraube (11) an der genannten Endschnittfläche (10) des Blattendstücks (3) wenigstens einen Hüllenlappen (14c, 14d) befestigt, der wenigstens einen der genannten Saugseiten- (14a) und Druckseitenflügel (14b) der Hülle (14) verlängert und bezüglich der genannten Saugseiten- (14a) und Druckseitenflügel (14b) der Hülle abgekantet ist.

6. Blatt nach Anspruch 4, **dadurch gekennzeichnet**, daß die genannte Schraube (11) an der genannten Endschnittfläche des Blattendstücks (3) eine elektrisch leitfähige Endrippe (34e) der Hülle (34) befestigt, welche den genannten Saugseiten-(34a) mit dem Druckseitenflügel (34b) der Hülle (34) verbindet und sich über den ganzen Querschnitt der genannten Endschnittfläche erstreckt.

7. Blatt nach einem der Ansprüche 2 bis 5, **dadurch gekennzeichnet**, daß die genannte Hülle (34', 34") eine elektrisch leitfähige, partielle Endrippe (34'e, 34"e) umfaßt, welche den Saugseiten- (34'a, 34"a) und Druckseitenflügel (34'b, 34"b) der Hülle (34', 34") verbindet, mit denen die genannte partielle Rippe (34'e, 34"e) in elektrischer Leitkontinuität steht, und welche sich über einen Teil des Abschnitts der genannten Endschnittfläche (10) erstreckt, der an die Hinterkante (8) angrenzt.

8. Blatt nach Anspruch 7, **dadurch gekennzeichnet**, daß die partielle Endrippe wenigstens einen Hüllenfortsatz (34'e) umfaßt, der einen der Saugseiten- und Druckseitenflügel (34'a, 34'b) der Hülle (34') verlängert und an den genannten, an die Hinterkante (8) angrenzenden Teil der Endschnittfläche (10) hingebogen ist, wobei der genannte Fortsatz (34'e) vorzugsweise durch Verschweißung am jeweils anderen Saugseiten- bzw. Druckseitenflügel (34'a, 34'b) der Hülle (34') befestigt ist.

9. Blatt nach Anspruch 7, **dadurch gekennzeichnet**, daß die partielle Endrippe (34"e) wenigstens einen Hüllen-Doppelfortsatz (34"f) enthält, der einen der Saugseiten- und Druckseitenflügel (34"a, 34"b) der Hülle (34") verlängert und von dem ein erster, an den genannten Flügel (34"a, 34"b) angrenzender Teil (34"g) der Hülle (34") an den genannten, an die Hinterkante (8) angrenzenden Teil der Endschnittfläche (10) hingebogen ist, wogegen der zweite Teil (34"h) des Doppelfortsatzes (34"f), der an den ersten Teil (34"g) dieses letzteren angrenzt, bezüglich des ersten Teils (34"g) des genannten Doppelfortsatzes (34"f) gekröpft und vorzugsweise mittels wenigstens einer Niete (25) an einem zweiten Fortsatz (34"i) befestigt ist, der den anderen Saugseiten- bzw. Druckseitenflügel (34"a, 34"b) der Hülle (34") verlängert und entlang der Spannweite über die genannte Endschnittfläche (10) des Blattendstücks (3) hinaus vorsteht.

10. Blatt nach einem der Ansprüche 1 bis 5, **dadurch gekennzeichnet**, daß die Hülle (134) eine zumindest partielle, elektrisch leitfähige Endrippe (134e) umfaßt, die mit dem Saugseiten- (134a) und Druckseitenflügel (134b) der Hülle (134) in elektrischer Leitkontinuität steht und von wenigstens einem Schlitz durchbohrt ist, der mindestens von einem elektrisch leitfähigen Ansatz (135) durchquert ist, der mit dem Verbundaufbau des Blattes vereint ist und entlang der Spannweite vom Blattendstück (3) nach außen absteht, wobei der nach außen von der Rippe (134e) abstehende Bereich des Ansatzes (135) zumindest zum Teil (135a, 135b) an die genannte Rippe (134e) hingebogen ist, um die Rippe (134e) an der Endschnittfläche (10) des Blattes befestigt zu halten.

11. Blatt nach einem der Ansprüche 1 bis 5, **dadurch gekennzeichnet**, daß der Verbundaufbau des Blattes entlang der Spannweite verlängert ist und nach außen vom Blattendstück (3) mit wenigstens einem elektrisch leitfähigen Ansatz (235) vorsteht, der mit dem genannten Verbundaufbau vereint ist und bei dem an zwei abgewandten Flächen durch vorzugsweise leitfähige Verklebung und/oder durch Vernietung (238) oder Verschraubung gekröpfte Teile (237a, 237b) wenigstens zweier Lappen (236a, 236b) befestigt sind, die an die Endschnittfläche (10) des Blattendstücks (3) hingebogen sind und die jeweils mit dem Saugseiten- (234a) bzw. dem Druckseitenflügel (234b) der Hülle (234) verbunden sind.

12. Blatt nach einem der Ansprüche 3 bis 11, **dadurch gekennzeichnet**, daß die genannten mechanischen Befestigungsmittel wenigstens eine Niete (17) umfassen, die wenigstens einen der Saugseiten- (14a) und Druckseitenflügel (14b) der Hülle (14) an wenigstens einer der genannten Saugseiten- (5) und Druckseitenoberflächen (6) in Höhe des Blattendstücks (3) in einer Nachbarzone der Hinterkante (8) und/oder in einer Nachbarzone der Vorderkante (7) befestigt.

13. Blatt nach einem der Ansprüche 1 bis 12, **dadurch gekennzeichnet**, daß wenigstens einer der genannten Saugseiten- und Druckseitenflügel (14a, 14b) der Hülle (14) entlang der Spannweite eine Materialabmessung und/oder einen Materialquerschnitt hat, die/der in der Nachbarzone der Vorderkante (7) größer als in der Nachbarzone der Hinterkante (8) ist.

14. Blatt nach Anspruch 13, **dadurch gekennzeichnet**, daß wenigstens einer der genannten Saugseiten- und Druckseitenflügel (34a, 34b) der Hülle (34) entlang der Spannweite eine Materialabmessung und/oder einen Materialquerschnitt aufweist, die/der sich im wesentlichen progressiv von einer Nachbarzone der Vorderkante zu einer Nachbarzone der Hinterkante (8) verringert und die/der dann in einer direkt an die Hinterkante (8) angrenzenden Zone zunimmt und zwar bis zu dieser Kante.

15. Blatt nach einem der Ansprüche 1 bis 14, **dadurch gekennzeichnet**, daß wenigstens einer der genannten Saugseiten- und Druckseitenflügel (14a, 14b) der Hülle (14) in seiner Nachbarzone der Vorderkante (7) entlang der Spannweite eine Materialabmessung und/oder einen Materialquerschnitt hat, die/der nicht wesentlich geringer als die Materialabmessung und/oder der Materialquerschnitt der angrenzenden Zone des entsprechenden Saugseiten- (13a) oder Druckseitenflügels (13b) der Haube (13) entlang der Tiefe ist.

16. Blatt nach einem der Ansprüche 1 bis 15, **dadurch gekennzeichnet**, daß wenigstens einer der Saugseiten- und Druckseitenflügel (14a, 14b) der Hülle (14) in seiner Nachbarzone der Vorderkante (7) eine Kante (16a, 16b) hat, die sich auf der entsprechenden Saugseiten- oder Druckseitenoberfläche (5, 6) erstreckt und die über einen konkaven Teil mit einem Übergangsradius an die entsprechende Kante (15a, 15b) des entsprechenden Saugseiten- oder Druckseitenflügels (13a, 13b) der Haube (13) Anschluß hat.

17. Blatt nach einem der Ansprüche 1 bis 16, **dadurch gekennzeichnet**, daß wenigstens einer der Saugseiten- und Druckseitenflügel (14'a, 14'b) der Hülle (14') zumindest in seiner Nachbarzone der Vorderkante einen so ausgebildeten Querschnitt hat, daß er wenigstens gleich oder größer als derjenige des entsprechenden Saugseiten- oder Druckseitenflügels (13'a, 13'b) der Haube (13') in seiner an die Hülle (14') angrenzenden Zone ist.

18. Blatt nach einem der Ansprüche 1 bis 17, **dadurch gekennzeichnet**, daß die Haube (13") und die Hülle (14") Saugseitenflügel (13"a, 14"a) haben, die entlang der Tiefe und der Spannweite des Blattes im wesentlichen die gleichen Abmessungen wie ihre Druckseitenflügel haben.

19. Blatt nach einem der Ansprüche 1 bis 17, **dadurch gekennzeichnet**, daß die Haube (13') und die Hülle (14') Saugseitenflügel (13'a, 14'a) haben, die entlang der Tiefe und/oder der Spannweite des Blattes Abmessungen haben, die gegenüber denjenigen ihrer Druckseitenflügel (13'b, 14'b) verschieden sind.

20. Blatt nach einem der Ansprüche 1 bis 17, **dadurch gekennzeichnet**, daß die Hülle (14) Saug- und Druckseitenflügel (14a, 14b) hat, deren Abmessungen zumindest entlang der Spannweite des Blattes verschieden sind.

21. Blatt nach Anspruch 20, **dadurch gekennzeichnet**, daß die Kanten (16a, 16b) der Saugseiten- und Druckseitenflügel (14a, 14b) der Hülle (14), die sich auf den genannten Saugseiten- und Druckseitenoberflächen (5, 6) erstrecken, parallel zueinander verlaufen, jedoch entlang der Spannweite des Blattes in Bezug zueinander verschoben sind, wobei sie einer Polygonlinie folgen oder mit einer stetigen Krümmung.

22. Blatt nach einem der Ansprüche 1 bis 21, dessen Endstück (3') über wenigstens einen Teil der Tiefe abgestumpft ist und eine Vorderkante aufweist, die zur Hinterkante hin und zum Ende des Endstücks (3') hin geneigt ist, **dadurch gekennzeichnet**, daß die Hülle (44) eine Vorderkante (49) aufweist, die in gleicher Form wie diejenige des Endstücks (3') geneigt ist und an der entlang ihre Saugseiten- (44a) und Druckseitenflügel (14a, 14b) angrenzen und miteinander vereint sind.

23. Blatt nach einem der Ansprüche 1 bis 22, **dadurch gekennzeichnet**, daß die genannten elektrisch leitfähigen Mittel des Blattfußes (2) zum Sicherstellen der elektrischen Leitkontinuität zwischen der Haube (13) und der Nabe wenigstens ein elektrisch leitfähiges Band (18) und/oder Metallgeflecht umfassen, das sich von einem Ende der genannten Haube (13), das am nächsten zum genannten Blattfuß (2) liegt, bis zu einem Festpunkt (19) des Blattfußes (2) erstreckt und an diesem letzteren durch Verklebung und/oder Vernietung oder Verschraubung befestigt ist.

24. Blatt nach einem der Ansprüche 1 bis 22, **dadurch gekennzeichnet**, daß die genannten elektrisch leitfähigen Mittel des Blattfußes (2) zum Sicherstellen der elektrischen Leitkontinuität zwischen der Haube (13) und der Nabe eine durchgehende Verlängerung (13c) der genannten Haube (13) enthalten, die einen Teil des genannten Blattfußes (2) schützt, der in die Verlängerung der Vorderkante bis in die Nähe der Befestigungsmittel (9) des Blattes reicht, wobei die genannte Verlängerung (13c) der Haube (13) an wenigstens einem Punkt am Blattfuß (2) durch mechanische Befestigungsmittel (19) in der Art von Schrauben oder Nieten und/oder durch einen vorzugsweise leitfähigen Kleber befestigt ist.

25. Blatt nach einem der Ansprüche 1 bis 22, wobei die genannten Befestigungsmittel (9) des Blattes am Blattfuß (2) wenigstens eine metallische und elektrisch leitfähige Befestigungsbuchse (9) umfassen, **dadurch gekennzeichnet**, daß die genannten elektrisch leitfähigen Mittel des Blattfußes (2) zum Sicherstellen der elektrischen Leitkontinuität zwischen der Haube (13) und der Nabe eine durchgehende Verlängerung (13c) der genannten Haube (13) enthalten, die sich so weit erstreckt, daß sie in direkter Verbindung (13d) mit der genannten Befestigungsbuchse (9) ist.

26. Blatt nach einem der Ansprüche 1 bis 25, **dadurch gekennzeichnet**, daß die genannte Hülle (14") ein Hinterende (24) aufweist, das über die Hinterkante (8) des Blattes hinaus abstehend übersteht.

27. Blatt nach einem der Ansprüche 1 bis 26, wobei die Verstärkungsfasern des genannten Verbundaufbaus (20) Karbonfasern umfassen, **dadurch gekennzeichnet**, daß es zumindest zwischen dem genannten Strömungsteil (1) und der genannten Haube (13') der Vorderkante eine dielektrische Unterhaube (21) vorzugsweise aus Verbundwerkstoff mit einer Synthetikmatrix und Verstärkungsfasern aus Glas umfaßt, welche die Haube (13') der Vorderkante des genannten Verbundaufbaus (20) isoliert.

28. Blatt nach einem der Ansprüche 1 bis 27, **dadurch gekennzeichnet**, daß die Hülle (14) und die Haube (13) aus Blech aus Titan, aus nichtoxidierbarem Formstahl oder aus elektrogeformtem Nickel sind.

## Claims

1. Blade with shielding for enhanced protection against lightning for a rotorcraft rotor, particularly for a helicopter tail rotor, said blade comprising a composite structure (20) essentially in composite material with a synthetic matrix and inorganic and/or organic reinforcing fibres, producing a profiled main blade section (1) delimited between a suction face surface (5) and a pressure face surface (6) which extend, in the direction of the chord of the blade, between a leading edge (7) and a trailing edge (8) and, in the direction of the span of the blade, between a blade tip (3) at one end of said main blade section (1) and a blade root (2) which extends the opposite end of said main blade section (1) and which includes means (9) for attaching the blade for linking it to a rotor hub, said shielding for protection against lightning comprising:
- a glove (13) for protecting the leading edge (7), said glove (13) being metallic, electrically conducting, and comprising a suction face arm (13a) and a pressure face arm (13b) which are adjacent along the leading edge and are fixed to underlying parts of the suction face surface (5) and pressure face surface (6),
- a cover (14) for protecting said blade tip (3), said cover (14) covering at least the end of said blade tip (3) and being metallic, electrically conducting, and comprising a suction face arm (14a) and a pressure face arm (14b) which extend over the entire end chord of said blade tip (3) and which are applied to underlying parts of said suction face surface (5) and pressure face surface (6) respectively, in the region of the tip (3), while being connected with electrical continuity to said glove (13), and
- electrically conducting means (18) on said blade root (2) intended to provide electrical continuity between said glove (13) and electrically conducting means of said hub, for earthing said shielding,
characterized in that said glove (13) for the leading edge (7) and said cover (14) for the blade tip (3) are produced as a single component (12) which is fixed by said cover (14) against at least the end face (10) of said composite structure (20) in the region of said blade tip (3) with the aid of fixing means which are at least in part electrically conducting.

2. Blade according to Claim 1, characterized in that the fixing means comprise at least one adhesive, possibly an electrically conducting adhesive, for gluing the cover (14) against at least part of the end face (10) of the blade tip (3) and/or part of at least one of said suction face surface (5) and pressure face surface (6) of the composite structure (20), said glove (13) also adhering, by glueing, to said composite structure (20).

3. Blade according to one of Claims 1 and 2, characterized in that said fixing means comprise mechanical means (11, 17) having protruding shapes, such as screws and rivets, constituting predetermined points for the lightning to strike or to exit, and placed in electrical continuity with said cover (14).

4. Blade according to Claim 3, characterized in that said mechanical fixing means comprise at least one screw (11) for balancing and/or for closing a housing (23) of at least one balancing and/or dynamic-adjustment weight and which is screwed into a region of said end face (10) of the blade tip (3) which is closer to said leading edge (7) than to the trailing edge (8)

5. Blade according to Claim 4, characterized in that said screw (11) fixes against said end face (10) of the blade tip (3) at least one cover lug (14c, 14d) which extends at least one of said suction face arm (14a) and pressure face arm (14b) of said cover (14) and is bent with respect to said suction face arm (14a) and pressure face arm (14b) of the cover.

6. Blade according to Claim 4, characterized in that said screw (11) fixes against said end face of the blade tip (3) an electrically conducting end flange (34e) of the cover (34), connecting said suction face arm (34a) and pressure face arm (34b) of the cover (34) and extending over the entire section of said end face.

7. Blade according to any one of Claims 2 to 5, characterized in that said cover (34', 34") comprises an electrically conducting partial end flange (34'e, 34"e) connecting the suction face arm (34'a, 34"a) and pressure face arm (34'b, 34"b) of the cover (34', 34") with which arms said partial flange (34'e, 34"e) is in electrical continuity, and extending over a part of the section of said end face (10) which is adjacent to said trailing edge (8).

8. Blade according to Claim 7, characterized in that said partial end flange comprises at least one cover flap (34'e) which extends one of said suction face and pressure face arms (34'a, 34'b) of the cap (34') and is bent against said end face part (10) adjacent to the trailing edge (8), said flap (34'e) being fixed, preferably by welding, to the other of said suction face and pressure face arms (34'a, 34'b) of the cover (34').

9. Blade according to Claim 7, characterized in that said partial end flange (34"e) comprises at least one double cover flap (34"f) which extends one of said suction face and pressure face arms (34"a, 34"b) of the cover (34"), and of which a first part (34"g), adjacent to said arm (34"a, 34"b) of the cover (34") is bent against said end face part (10) adjacent to the trailing edge (8), whereas the second part (34"h) of the double flap (34"f), adjacent to the first part (34"g) thereof is cranked with respect to the first part (34"g) of said double flap (34"f) and fixed, preferably by at least one rivet (25), against a second flap (34"i) extending the other of said suction face and pressure face arms (34"a, 34"b) of the cover (34") and projecting in the direction of the span beyond said end face (10) of the blade tip (3).

10. Blade according to any one of Claims 1 to 5, characterized in that the cover (134) includes an electrically conducting at least partial end flange (134e) in electrical continuity with the suction face arm (134a) and pressure face arm (134b) of the cover (134) and pierced with at least one slot through which at least one electrically conducting fin (135) secured to the composite structure of the blade and projecting in the direction of the span towards the outside of the blade tip (3) passes, a portion of the fin (135) which projects outside the flange (134e) being bent, at least in part (135a, 135b) against said flange (134e) so as to keep the flange (134e) applied against the end face (10) of the blade.

11. Blade according to any one of Claims 1 to 5, characterized in that the composite structure of the blade is extended, in the direction of the span and projecting outside the blade tip (3), by at least one electrically conducting fin (235) secured to said composite structure and against two opposed faces of which there are fixed, by gluing, preferably using a conducting glue and/or by riveting (238) or screwing, cranked parts (237a, 237b) of at least two lugs (236a, 236b) bent against the end face (10) of the blade tip (3) and each secured respectively to one of the suction face arm (234a) and pressure face arm (234b) of the cover (234).

12. Blade according to any one of Claims 3 to 11, characterized in that said mechanical fixing means comprise at least one rivet (17) fixing at least one of said suction face arm (14a) and pressure face arm (14b) of said cover (14) against at least one of said suction face surface (5) and pressure face surface (6) in the region of the blade tip (3), in a region near the trailing edge (8) and/or in a region near the leading edge (7).

13. Blade according to any one of Claims 1 to 12, characterized in that at least one of said suction face and pressure face arms (14a, 14b) of the cover (14) has a dimension and/or material section in the direction of the span which is larger in the region near the leading edge (7) than in the region near the trailing edge (8).

14. Blade according to Claim 13, characterized in that at least one of said suction face and pressure face arms (34a, 34b) of the cover (34) has a dimension and/or material section, in the direction of the span, which reduces substantially progressively from a region near the leading edge to a region near the trailing edge (8), then which increases in a region directly adjacent to the trailing edge (8) and as far as the latter.

15. Blade according to any one of Claims 1 to 14, characterized in that at least one of said suction face and pressure face arms (14a, 14b) of the cover (14) has, in its region near the leading edge (7), a dimension and/or material section in the direction of the span which is not substantially smaller than the dimension and/or material section in the direction of the chord of the adjacent region of the corresponding suction face arm (13a) or pressure face arm (13b) of the glove (13).

16. Blade according to any one of Claims 1 to 15, characterized in that at least one of the suction face and pressure face arms (14a, 14b) of the cover (14) has, in its region near the leading edge (7), an edge (16a, 16b) extending over said corresponding suction face or pressure face surface (5, 6) and which connects, via a concave part, with a blend radius, to the corresponding edge (15a, 15b) of the corresponding suction face or pressure face arm (13a, 13b) of the glove (13).

17. Blade according to any one of Claims 1 to 16, characterized in that at least one of the suction face and pressure face arms (14'a, 14'b) of the cover (14') has, at least in its region near the leading edge, a developed transverse section which is at least equal to or greater than that of the corresponding suction face or pressure face arm (13'a, 13'b) of the glove (13) in its region adjacent to the cover (14').

18. Blade according to any one of Claims 1 to 17, characterized in that the glove (13") and the cover (14") have suction face arms (13"a, 14"a) which have substantially the same dimensions as their pressure face arms, at least in the direction of the chord and of the span of the blade.

19. Blade according to any one of Claims 1 to 17, characterized in that the glove (13') and the cover (14') have suction face arms (13'a, 14'a) having dimensions which are different from those of their pressure face arms (13'b, 14'b) in the direction of the chord and/or the span of the blade.

20. Blade according to any one of Claims 1 to 17, characterized in that the cover (14) has a suction face arm and a pressure face arm (14a, 14b) of which the dimensions, at least in the direction of the span of the blade are different.

21. Blade according to Claim 20, characterized in that the edges (16a, 16b) of the suction face and pressure face arms (14a, 14b) of the cover (14) which extend over said suction face and pressure face surfaces (5, 6) evolve parallel to one another but are offset one with respect to the other in the direction of the span of the blade, following a line which is polygonal or has a continuous curvature.

22. Blade according to any one of Claims 1 to 21, in which the tip (3') is truncated along at least part of the chord and has a leading edge inclined towards the trailing edge and towards the end of the tip (3'), characterized in that the cover (44) has an inclined leading edge (49) of the same shape as that of the tip (3') and along which its suction face arm (44a) and pressure face arm (14a, 14b) are adjacent and secured together.

23. Blade according to any one of Claims 1 to 22, characterized in that said electrically conducting means of said blade root (2), in order to provide electrical continuity between the glove (13) and the hub, comprise at least one tape (18) and/or one braid which is metallic and electrically conducting extending from one end of said glove (13) which is closest to said blade root (2) as far as a fixed point (19) of said blade root (2) and fixed thereto by gluing and/or riveting or screwing.

24. Blade according to any one of Claims 1 to 22, characterized in that said electrically conducting means of said blade root (2), in order to provide electrical continuity between the glove (13) and the hub, comprise a continuous extension (13c) of said glove (13) which protects part of said blade root (2) coming into alignment with the leading edge as far as close to said blade attachment means (9), said extension (13c) of the glove (13) being fixed at least at one point against said blade root (2) by mechanical fixing means (19) of the screw or rivet type and/or by an adhesive, preferably a conducting adhesive.

25. Blade according to any one of Claims 1 to 22, in which said blade attachment means (9) comprise, on the blade root (2), at least one metallic and electrically conducting attachment bushing (9), characterized in that said electrically conducting means of said blade root (2), in order to provide electrical continuity between the glove (13) and the hub, comprise a continuous extension (13c) of said glove (13) which extends as far as being in direct connection (13d) with said attachment bushing (9).

26. Blade according to any one of Claims 1 to 25, characterized in that said cover (14") has a trailing end (24) which protrudes projecting beyond said trailing edge (8) of the blade.

27. Blade according to any one of Claims 1 to 26, in which the reinforcing fibres of said composite structure (20) comprise carbon fibres, characterized in that it comprises, at least between said main blade section (1) and said leading edge glove (13'), an underlying dielectric glove (21), preferably a composite one with a synthetic matrix and reinforcing fibres of glass which insulates the leading edge glove (13') from said composite structure (20).

28. Blade according to any one of Claims 1 to 27, characterized in that the cover (14) and the glove (13) are of titanium, formed stainless steel, or electroformed nickel sheet.
